# EUROPEAN PATENT APPLICATION

(11) **EP 4 746 461 A1**
(43) Date of publication of application: **20.05.2026**
(21) Application number: 24935744.3
(22) Date of filing: 18.12.2024
(51) Int. Cl.: H04W 4/80

(54) **DATA PROCESSING METHOD AND ELECTRONIC DEVICE**

(30) Priority: 19.04.2024 CN 202410480546
(71) Applicant: Huawei Technologies Co., Ltd., Shenzhen, Guangdong 518129 (CN)
(72) Inventor: ZHOU, Rong, Shenzhen, Guangdong 518129 (CN); ZHANG, Bangming, Shenzhen, Guangdong 518129 (CN)
(74) Representative: Isarpatent
(86) International application number: PCT/CN2024/140385
(87) International publication number: WO 2025/218216

(57) **Abstract**

This application relates to the data processing field of a smart terminal, and relates to an electronic device and a data processing method thereof. The method includes: in response to an interaction operation between a first electronic device and a second electronic device, obtaining device information of the second electronic device; determining, based on the device information of the second electronic device, at least one application supported by the second electronic device; determining a target application from the at least one application supported by the second electronic device, and transmitting first data to the second electronic device; and triggering the second electronic device to process the first data by using the target application. According to the foregoing data processing method, the first electronic device obtains the first data, enables, based on the interaction operation between the electronic devices, the second electronic device to automatically obtain the target data, and indicates the second electronic device to process the target data by using the target application. This avoids a need to first perform a transmission operation of the target data between the electronic devices, and then use the target application of the second electronic device to process the target data.

## Description

This application claims priority to Chinese Patent Application No. 202410480546.5, filed with the China National Intellectual Property Administration on April 19, 2024 and entitled "DATA PROCESSING METHOD AND ELECTRONIC DEVICE", which is incorporated herein by reference in its entirety.

### TECHNICAL FIELD

Embodiments of this application relate to the data processing field of a smart device, and specifically, to a data processing method and an electronic device data processing product.

### BACKGROUND

With increasingly wide application of smart devices in daily life, a user can obtain a plurality of types of data by using the smart device, and process the data by using the smart device. For example, the user takes a photo with a mobile phone, and beautifies the photo by using a photo application of the mobile phone. Alternatively, after obtaining a two-dimensional code through photographing or two-dimensional code scanning, the user invokes an application of the mobile phone to parse out a web page link corresponding to the two-dimensional code, and finally opens the web page link by using a browser application of the mobile phone to browse a web page.

However, if the user wants to send data collected/saved by one electronic device to another electronic device for processing, the user needs to transmit the data to the another electronic device, and use the another electronic device to process the data. For example, if the user wants to perform refined processing on the photo taken with the mobile phone, the user sends the photo to a personal computer (personal computer, PC), and processes the photo by using a photo editing application of the personal computer. For another example, if the user parses out, by using the application of the mobile phone, the web page link corresponding to the two-dimensional code, and the web page link can be opened by only a browser of the personal computer, the web page link is sent to the personal computer, and the web page link is opened by using the browser application of the personal computer. The foregoing data transmission process needs to be manually completed by the user and is complex, which brings poor user experience.

### SUMMARY

This application provides an electronic device and a data processing method thereof.

According to a first aspect, this application provides a data processing method, applied to a first electronic device. The method includes:
in response to an interaction operation between the first electronic device and a second electronic device, obtaining device information of the second electronic device; determining, based on the device information of the second electronic device, at least one application supported by the second electronic device; determining a target application from the at least one application supported by the second electronic device, and transmitting first data to the second electronic device; and triggering the second electronic device to process the first data by using the target application.

In this specification, the first electronic device and the second electronic device herein may be a mobile phone and a personal computer respectively. The device information of the second electronic device may include a product name or a product ID and a device type of the second electronic device. The product name or the product ID may be used to uniquely identify the second electronic device, and the device type is used to determine the at least one application supported by the second electronic device. The target application herein may be an application that is supported by the second electronic device and that is used to process the first data. The interaction operation herein may include an interaction manner/interaction operation between the first electronic device and the second electronic device, for example, a OneHop operation or a data sharing operation.

According to the foregoing data processing method, after a user obtains the first data by using the first electronic device, based on the interaction operation between the electronic devices, the second electronic device may be enabled to automatically obtain the target data, and the second electronic device is indicated to process the target data by using the target application. This improves data processing flow efficiency. This avoids a complex step in which the user needs to first perform a transmission operation of the target data between the electronic devices, and then use the target application of the second electronic device to complete data processing of the target data, can implement quick processing of the target data between the electronic devices, and improves user experience.

In a possible implementation of the first aspect, when the interaction operation occurs between the first electronic device and the second electronic device, the first data is in a first state on the first electronic device, where the first state includes an open state or a selected state.

In this specification, the open state herein may indicate that the first electronic device currently displays or currently runs the first data. For example, when the corresponding first data is a photo, the open state may indicate a currently displayed photo of the first electronic device; or when the corresponding target data is music, the open state may indicate currently played music of the first electronic device. The selected state may indicate that the first data is selected by the first electronic device in an application of the first electronic device in response to a user operation. For example, when the corresponding first data is a photo, the selected state may indicate that the photo is selected in a gallery application of the first electronic device; or when the corresponding first data is a file, the selected state may indicate that the file is selected in a folder application of the first electronic device.

It can be learned that, when the first data is in the first state on the first electronic device, based on an interaction manner between the electronic devices, the second electronic device may be enabled to automatically obtain the first data, and the second electronic device is indicated to use the target application to process the first data. This can implement quick processing of the first data between the electronic devices, and improves user experience.

In a possible implementation of the first aspect, transmitting the first data to the second electronic device includes: when the interaction operation occurs between the first electronic device and the second electronic device, transmitting, to the second electronic device, the first data that is in the first state on the first electronic device.

In this specification, when the interaction operation occurs between the first electronic device and the second electronic device, the first electronic device may automatically transmit, to the second electronic device, the first data that is currently displayed, currently run, or selected by the user.

It can be learned that, the interaction operation between the first electronic device and the second electronic device does not need to be authorized by the user in advance, for example, turning on Wi-Fi or Bluetooth to transmit the first data to the second electronic device by using a share button, or opening an application to transmit the first data to the second electronic device. This improves data processing efficiency.

In a possible implementation of the first aspect, the method further includes: The first electronic device obtains product configuration information and application configuration information. The product configuration information includes product IDs, product names, and device types of a plurality of electronic devices, and the application configuration information includes application names and application package names of a plurality of applications, and device types supported by the applications.

In this specification, the first electronic device may pre-obtain the product configuration information including the plurality of electronic devices and application configuration information supported by an electronic device. The product configuration information may mainly include the product ID, the product name, and the device type. The product ID or the product name may be used to uniquely identify the second electronic device, and the device type may be used to determine, in combination with the application configuration information, the at least one application supported by the second electronic device. Each application included in the application configuration information records a device type of an electronic device that can be supported.

It can be learned that the first electronic device may obtain the product configuration information and the application configuration information when the first electronic device is powered on and/or when a specified cycle elapses. When the interaction operation is performed between the first electronic device and the second electronic device, the first electronic device may determine, based on the product configuration information and the application configuration information that are pre-obtained, whether the first data needs to be transmitted to the second electronic device, and indicate the second electronic device to process the first data. This improves data processing efficiency.

In a possible implementation of the first aspect, when the device information of the second electronic device includes the device type of the second electronic device, determining, based on the device information of the second electronic device, the at least one application supported by the second electronic device includes: determining, based on the application configuration information, at least one application corresponding to the device type of the second electronic device.

In this specification, each application included in the application configuration information herein records the device type of the electronic device that can be supported. When the foregoing interaction operation is performed between the first electronic device and the second electronic device, the first electronic device may obtain the device type of the second electronic device, and determine, from the application configuration information based on the device type, the at least one application supported by the second electronic device. For example, if the second electronic device is a personal computer, it may be determined that the personal computer supports a photo application, a music application, a video application, and the like.

It can be learned that, based on a correspondence between an application and a device type in the application configuration information, the first electronic device may determine the at least one application that can be supported by the second electronic device. In this way, the first electronic device can automatically identify an application for processing the first data.

In a possible implementation of the first aspect, when the device information of the second electronic device includes the product ID or the product name of the second electronic device, but does not include the device type of the second electronic device, determining, based on the device information of the second electronic device, the at least one application supported by the second electronic device includes: determining, based on the product configuration information, the device type that is of the second electronic device and that corresponds to the product ID or the product name of the second electronic device; and determining, based on the application configuration information, at least one application corresponding to the device type of the second electronic device.

In this specification, when the first electronic device obtains only the product ID or the product name of the second electronic device from the second electronic device but does not obtain the device type, the first electronic device may determine the device type of the second electronic device based on a correspondence between the product ID or the product name and the device type in the product configuration information. Then, the first electronic device may determine, based on the obtained device type of the second electronic device, the at least one application supported by the second electronic device from the application configuration information.

It can be learned that, although the first electronic device does not directly obtain the device type of the second electronic device when performing the interaction operation with the second electronic device, the first electronic device may first determine the device type of the second electronic device based on the correspondence between the product ID or the product name and the device type in the product configuration information, and then determine, based on a correspondence between an application and a device type in the application configuration information, the at least one application that can be supported by the second electronic device. In this way, the first electronic device can automatically identify an application for processing the first data. In this way, the first electronic device can automatically identify an application for processing the first data.

In a possible implementation of the first aspect, determining the target application from the at least one application supported by the second electronic device, and transmitting the first data to the second electronic device includes: determining, from the at least one application supported by the second electronic device based on a data type of the first data, an application name or an application package name of the target application corresponding to the data type.

In this specification, the first electronic device may select, from the determined application, the target application corresponding to the data type of the first data, and indicate the second electronic device to process the first data by using the target application. Herein, the at least one application supported by the second electronic device may indicate that an application is installed on the second electronic device, and the application may be started, or that no application is installed on the second electronic device, but the application may be started after installation.

It can be learned that the first electronic device may select, from the determined at least one application, the target application corresponding to the data type of the first data. For example, when the corresponding first data is music, the target application may be a music application.

In a possible implementation of the first aspect, triggering the second electronic device to perform, by using the target application, data processing corresponding to the first data includes: indicating the second electronic device to use, based on the application name or the application package name of the target application, the target application to process the first data.

In this specification, the first electronic device may obtain the application name or the application package name corresponding to the target application. The target application includes a cloud service or a mini application registered on a cloud service platform, and the first electronic device may indicate, by using the cloud service platform, the second electronic device to use the target application to process the first data. For example, the first electronic device may transmit the product ID, the product name, and the like of the second electronic device and the application name or the application package name of the target application to the cloud service platform. The cloud service platform indicates, based on the product ID and the product name, a cloud service client configured by the second electronic device, and processes, based on the application name or the application package name, the first data by using the target application. The cloud service platform herein may be an application store.

It can be learned that the first electronic device sends the first data to the second electronic device, and the first electronic device may further indicate the second electronic device to invoke the target application to process the first data, so that the second electronic device automatically obtains the target data, and automatically processes the target data by using the target application. This improves data processing flow efficiency.

In a possible implementation of the first aspect, the interaction operation includes at least one of the following: the second electronic device comes into contact with the first electronic device; or a distance between the second electronic device and the first electronic device is reduced to be less than a first distance threshold.

It can be learned that the interaction operation between the first electronic device and the second electronic device may include an NFC-based OneHop operation and various Bluetooth or Wi-Fi-based near field communication operations.

In a possible implementation of the first aspect, the first electronic device transmits the first data to the second electronic device through at least one of Bluetooth, Wi-Fi, and a cellular network.

It can be learned that, in addition to transmitting the first data between the first electronic device and the second electronic device in a communication manner corresponding to the interaction operation, the first data may be further transmitted in any communication manner in Bluetooth, Wi-Fi, the cellular network, and the like. This improves efficiency of transmitting the first data between the first electronic device and the second electronic device.

In a possible implementation of the first aspect, the method further includes: The first electronic device obtains the product configuration information and the application configuration information when the first electronic device is powered on or at the specified cycle.

It can be learned that the first electronic device may be configured to: obtain, before delivery, when the first electronic device is powered on for the first time/each time, and/or after the specified cycle elapses, a configuration file including the product configuration information or the application configuration information, and update the configuration file to a local cache. The first electronic device may obtain product configuration information and application configuration information of each electronic device in a self-defined manner and in a timely manner.

In a possible implementation of the first aspect, the first electronic device and the second electronic device are logged in to by using a same user account, or the first electronic device and the second electronic device are trusted devices.

It can be learned that the first electronic device and the second electronic device may be electronic devices that are logged in to by using the same user account, or electronic devices that have transmitted data between the first electronic device and the second electronic device, or the like. In this way, data can be transmitted and processed in a timely and efficient manner between a plurality of electronic devices with a same user name.

According to a second aspect, this application provides an electronic device, including:
a memory, configured to store instructions executed by one or more processors of the electronic device, and
the processor, configured to read the instructions to perform the data processing method in any one of the first aspect or the implementations.

According to a third aspect, this application provides a computer program product, including a non-volatile computer-readable storage medium. The non-volatile computer-readable storage medium includes computer program code used to perform the data processing method in any one of the first aspect or the implementations.

For beneficial effects of the foregoing aspects, refer to each other.

### BRIEF DESCRIPTION OF DRAWINGS

FIG. 1(a) to FIG. 1(e) are examples of diagrams of a scenario in which a user uses a mobile phone and a personal computer to process data according to an embodiment of this application;
FIG. 2(a) to FIG. 2(h) are examples of diagrams of scenarios of a data processing method according to an embodiment of this application;
FIG. 3 is an example of a diagram of a data transmission service used to implement a data processing method in embodiments of this application;
FIG. 4 is an example of a diagram of a software structure of an electronic device to which a data processing method provided in embodiments of this application is applicable;
FIG. 5 is an example of a diagram of an interaction process of implementing a data processing method between electronic devices according to an embodiment of this application;
FIG. 6 is an example of a diagram of an interaction process of implementing a data processing method between electronic devices according to an embodiment of this application;
FIG. 7 is an example of a diagram of an interaction process of implementing a data processing method between electronic devices according to an embodiment of this application;
FIG. 8 is an example of a diagram of an interaction process of implementing a data processing method between electronic devices according to an embodiment of this application;
FIG. 9 is an example of a diagram of an interaction process of implementing a data processing method between electronic devices according to an embodiment of this application;
FIG. 10 is an example of a diagram of an interaction process of implementing a data processing method between electronic devices according to an embodiment of this application;
FIG. 11(a) is an example of a diagram of a method for implementing device authentication/service discovery, target data collection/transmission, and target data parsing/processing between electronic devices according to an embodiment of this application;
FIG. 11(b) is an example of a diagram of storage formats of application configuration information and product configuration information;
FIG. 12A and FIG. 12B are an example of a diagram of an interaction process of implementing a data processing method between electronic devices according to an embodiment of this application;
FIG. 13A and FIG. 13B are an example of a diagram of an interaction process of implementing a data processing method between electronic devices according to an embodiment of this application;
FIG. 14A and FIG. 14B are an example of a diagram of an interaction process of implementing a data processing method between electronic devices according to an embodiment of this application; and
FIG. 15 is an example of a block diagram of a hardware structure of an electronic device according to an embodiment of this application.

### DESCRIPTION OF EMBODIMENTS

The following clearly and completely describes technical solutions in embodiments of this application with reference to accompanying drawings. The following embodiments may be mutually referenced.

It may be understood that a technical manner of this application is applicable to various types of electronic devices that can obtain/process data. The electronic device may specifically include mobile terminals such as a mobile phone, a tablet computer, and a wearable device, and may further include a personal computer, a notebook computer, a netbook, an ultra-mobile personal computer (ultra-mobile personal computer, UMPC), hardware servers (including an entry-level server, a workgroup-level server, a department-level server, and an enterprise-level server), a cloud server, and the like.

The following first describes the technical solutions of this application with reference to specific scenarios.

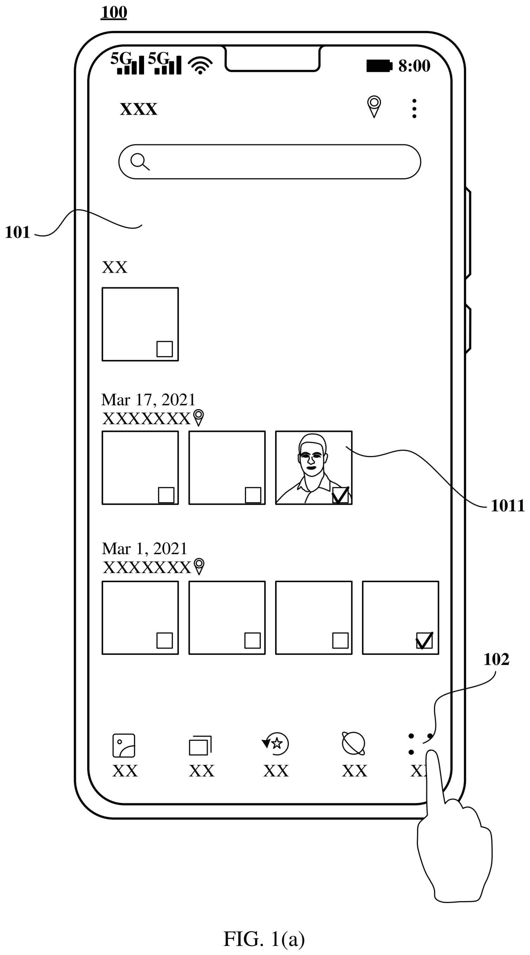

FIG. 1(a) to FIG. 1(e) are examples of diagrams of a scenario in which a user uses a mobile phone and a personal computer to process data according to this specification.

As shown in FIG. 1(a), an application interface 101 of a photo application is displayed on a screen of a mobile phone 100, and includes a plurality of photos and a selected target photo 1011. When no photo processing application is installed on the mobile phone 100 or a photo processing application of the mobile phone 100 does not support refined processing on the target photo 1011, the user may perform a OneHop operation on a control 102 (for example, a "XX" control or more controls) in the application interface 101.

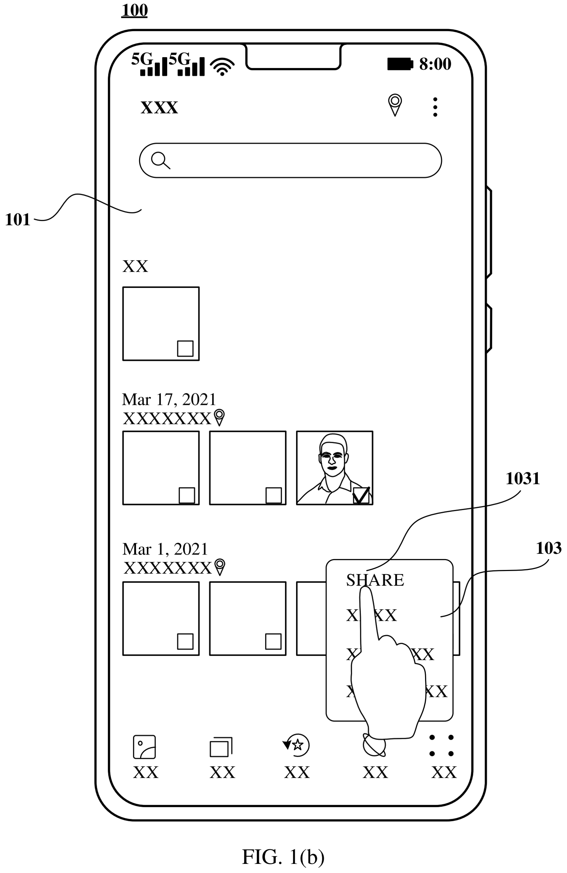

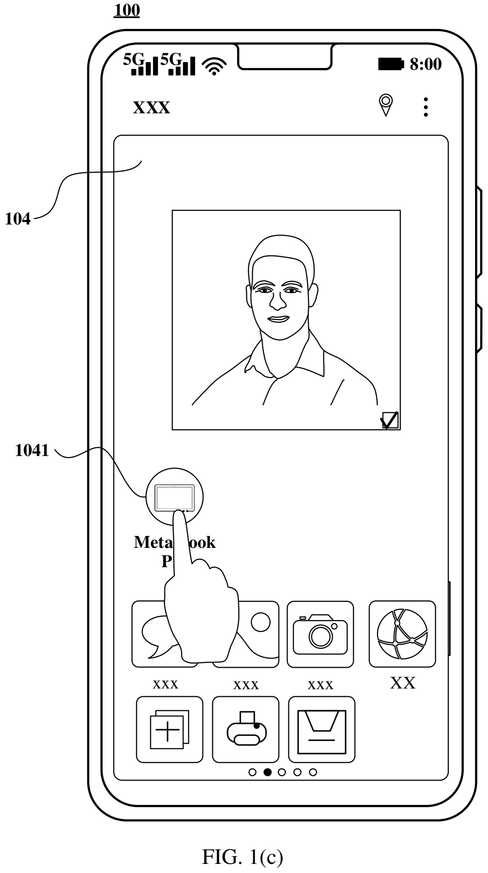

As shown in FIG. 1(b), the application interface 101 on the screen of the mobile phone 100 displays an operation interface 103, and the operation interface 103 includes a control 1031 (for example, a "SHARE" control or a share control) and the like. The user may perform a OneHop operation on the control 1031. As shown in FIG. 1(c), an application interface 104 of a share application is displayed on the screen of the mobile phone 100, and the application interface 104 may be overlaid and displayed on the application interface 101. The application interface 104 includes a control 1041 of a shareable device and the target photo 1011 that has been selected. The control 1041 of the shareable device herein may correspond to an electronic device that has established a device binding/user account synchronization relationship with the mobile phone 100. For example, Meta Book Pro may represent a personal computer 200. The data may be transmitted between the mobile phone 100 and the personal computer 200 in a wireless/wired communication manner. The user may perform a OneHop operation on the control 1041 of the shareable device, to transmit the target photo 1011 to the personal computer 200.

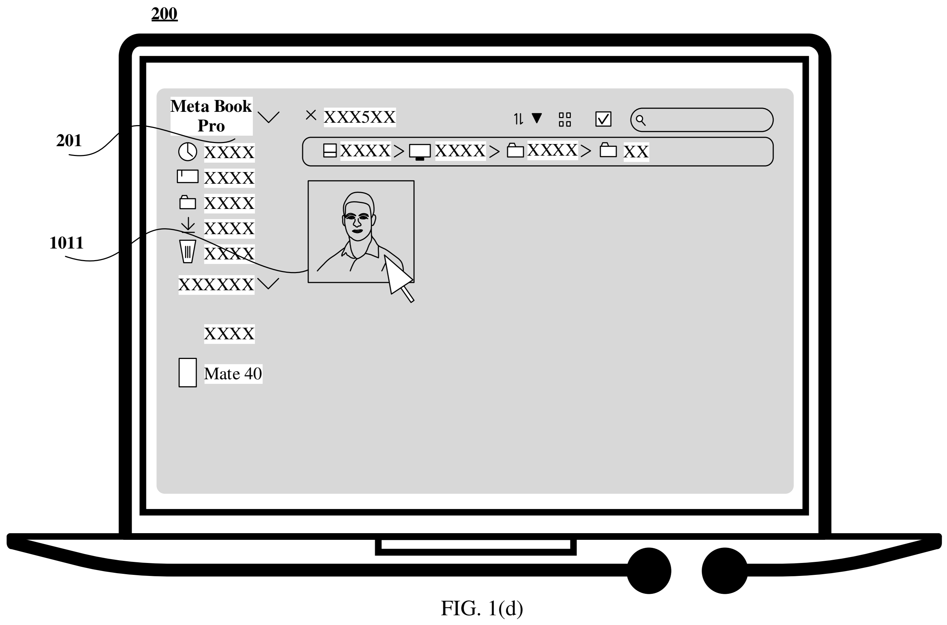

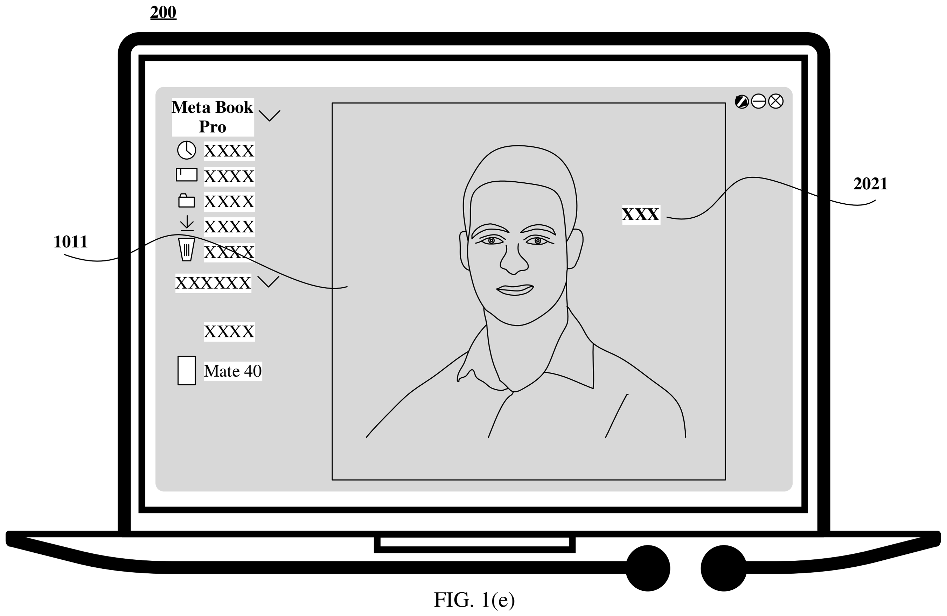

As shown in FIG. 1(d), an application interface 201 on a screen of the personal computer 200 displays an icon of the target photo 1011. The user may perform a OneHop operation on the icon of the target photo 1011 by using an input device (for example, a mouse or a touchpad) of the personal computer 200. As shown in FIG. 1(e), the target photo 1011 opened by using a photo editing application is displayed on the screen of the personal computer 200. The user may perform refined processing on the target photo 1011, for example, add a watermark 2021 to the target photo 1011.

It can be learned that the mobile phone and the personal computer have respective convenience in use. It is more convenient to use the mobile phone to perform operations such as photographing or two-dimensional code scanning, whereas it is more convenient to use the personal computer to perform operations such as rich text editing and image processing. In some application scenarios, the mobile phone and the personal computer often need to be used together. For example, when the user is out, the user may use the mobile phone to obtain a two-dimensional code through photographing or two-dimensional code scanning in a store, a counter, or the like. The two-dimensional code herein may be saved in the mobile phone in a manner of a photo of the two-dimensional code or information corresponding to the two-dimensional code. After the user arrives at home, the photo of the two-dimensional code or the information corresponding to the two-dimensional code needs to be sent to the personal computer, and a resource corresponding to the two-dimensional code is opened on the personal computer, for example, a web page link, a cloud video file, and a compressed file package with a large data amount. The photo of the two-dimensional code or the information corresponding to the two-dimensional code herein may be transmitted between the mobile phone and the personal computer in a wireless/wired communication manner, for example, near field Bluetooth, a local area network, a device cloud, a OneHop near field communication (near field communication, NFC) tag, a OneHop neighborhood aware network (neighborhood aware network, NAN) tag, a device sharing capability, an in-application clipboard capability, multi-modal input event trigger, or networking online trigger.

However, if the data obtained by the user with the mobile phone further needs to be processed by using the personal computer, the user has to send the data to the personal computer by using a data transmission operation. The series of operations for implementing data transmission need to be manually completed by the user and are complex, which brings inconvenience to the user in processing the data.

To resolve the foregoing problem, an embodiment of this application provides a data processing method. After obtaining target data, a first electronic device responds to an interaction manner/interaction operation between the first electronic device and a second electronic device, for example, a OneHop operation or a data sharing operation. The second electronic device receives the target data in a data transmission manner between the second electronic device and the first electronic device, and identifies the target data, including parsing/processing the target data based on a target data type/target data content corresponding to the target data. The parsing/processing herein may indicate that the second electronic device opens and runs the target data by using an application, or uses the target data to perform setting, configuration, or the like on another application of the second electronic device. For example, when a user handles a service or purchases an electronic resource at a counter, the user needs to use a mobile phone to scan a two-dimensional code on the counter to complete information or download information. In this case, the user may use the mobile phone to photograph the two-dimensional code and save the two-dimensional code. After going home, the user opens the photo of the two-dimensional code by using a photo library application/a gallery application of the mobile phone, and performs a OneHop operation on a personal computer with the mobile phone. The personal computer obtains the photo of the two-dimensional code, identifies the two-dimensional code in the photo, and processes data. For example, if the personal computer parses out a web page link corresponding to the two-dimensional code, the personal computer may directly open a browser to display a user interface of the specified web page link; or if the personal computer parses out a data file corresponding to the two-dimensional code, the personal computer opens a file downloading application for downloading. For another example, if the user wants to use a photo on the mobile phone as a photo of a smartwatch, the user may tap the smartwatch with the mobile phone, and the mobile phone transmits information of the mobile phone to the smartwatch by using a near field communication capability, and wakes up a management application on the smartwatch. The smartwatch and the mobile phone may additionally establish a communication connection like Bluetooth or Wi-Fi to transmit the photo. After receiving the photo, the smartwatch may start a screen application to display the photo in a specified application interface of the smartwatch, for example, configure the photo as a watch face background image of the smartwatch.

The interaction manner and the data transmission manner herein may be implemented based on Bluetooth, near field communication, Wi-Fi, device discovery, and the like, for example, near field communication OneHop, NAN OneHop, Bluetooth OneHop, and Bluetooth proximity.

It can be learned that according to the data processing method in embodiments of this application, after the user obtains/collects the target data by using one electronic device, based on an interaction manner between electronic devices (for example, a OneHop operation or a communication operation between the electronic devices), another electronic device may be enabled to automatically obtain the target data, and complete parsing/processing on the target data. This improves transfer efficiency of the target data. This avoids a complex step in which the user needs to first transmit the target data between the electronic devices and then complete data processing of the target data. This can implement quick processing of the target data between the electronic devices, and improves user experience.

In addition, it may be understood that, in some embodiments, one electronic device may pre-obtain product configuration information of a plurality of electronic devices and application configuration information supported by the electronic device. Each application included in the application configuration information herein records a device type of an electronic device that can be supported. When the foregoing interaction manner is performed between the first electronic device and the second electronic device, the first electronic device may obtain a device type of the second electronic device, determine, based on the device type, at least one application supported by the second electronic device from application configuration information, select, from the determined application, a target application corresponding to the target data type of the target data, and indicate the second electronic device to process the target data by using the target application. The following provides detailed description. Herein, the at least one application supported by the second electronic device may indicate that an application is installed on the second electronic device, and the application may be started, or that no application is installed on the second electronic device, but the application may be started after installation.

The target data may be target data that is in an open state or a selected state on the first electronic device. The open state herein may indicate that the first electronic device currently displays or currently runs the target data. For example, when the corresponding target data is a photo, the open state may indicate a currently displayed photo of the first electronic device; or when the corresponding target data is music, the open state may indicate currently played music of the first electronic device. The selected state may indicate that the target data is selected by the first electronic device in an application of the first electronic device in response to a user operation. For example, when the corresponding target data is a photo, the selected state may indicate that the photo is selected in a gallery application of the first electronic device; or when the corresponding target data is a file, the selected state may indicate that the file is selected in a folder application of the first electronic device.

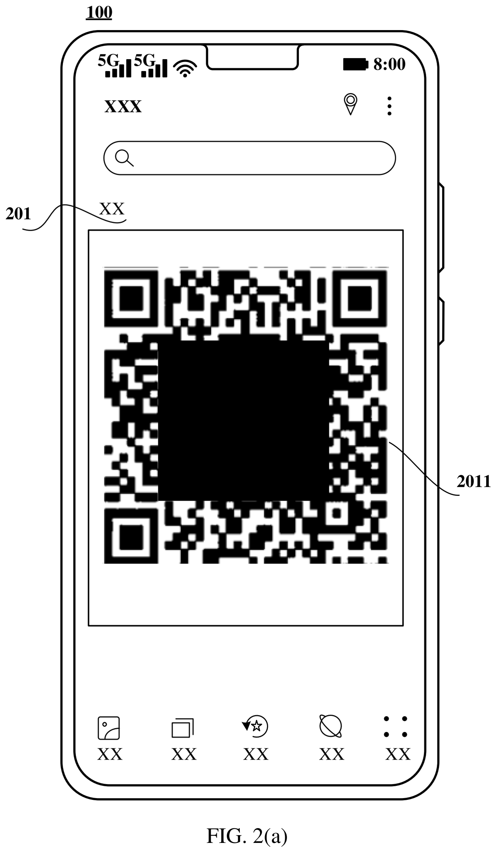

The following describes, by using FIG. 2(a) to FIG. 2(d), a diagram of a scenario to which the data processing method in embodiments of this application is applicable, and a scenario in which a user processes data with a mobile phone and a personal computer is correspondingly described.

As shown in FIG. 2(a), an application interface 101 of a photo application is displayed on a screen of a mobile phone 100, and the application interface 101 displays an opened target photo 2011. The target photo 2011 may be a photo that is of a two-dimensional code and that is taken by the user by using a camera of the mobile phone 100, or may be a picture that is of a two-dimensional code and that is obtained by the user by taking a screenshot of or saving the two-dimensional code in an application of the mobile phone 100.

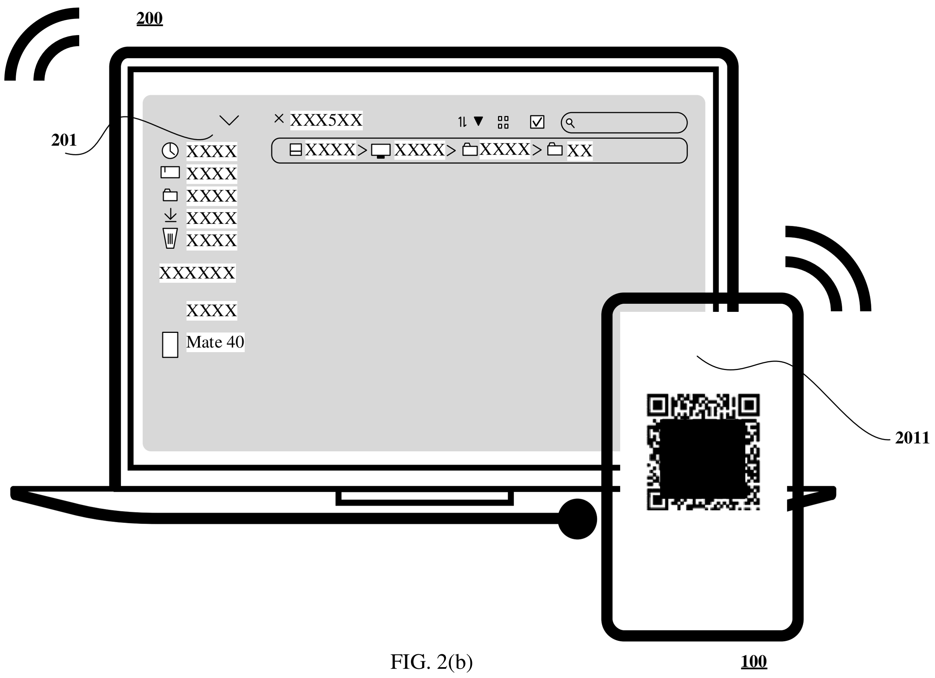

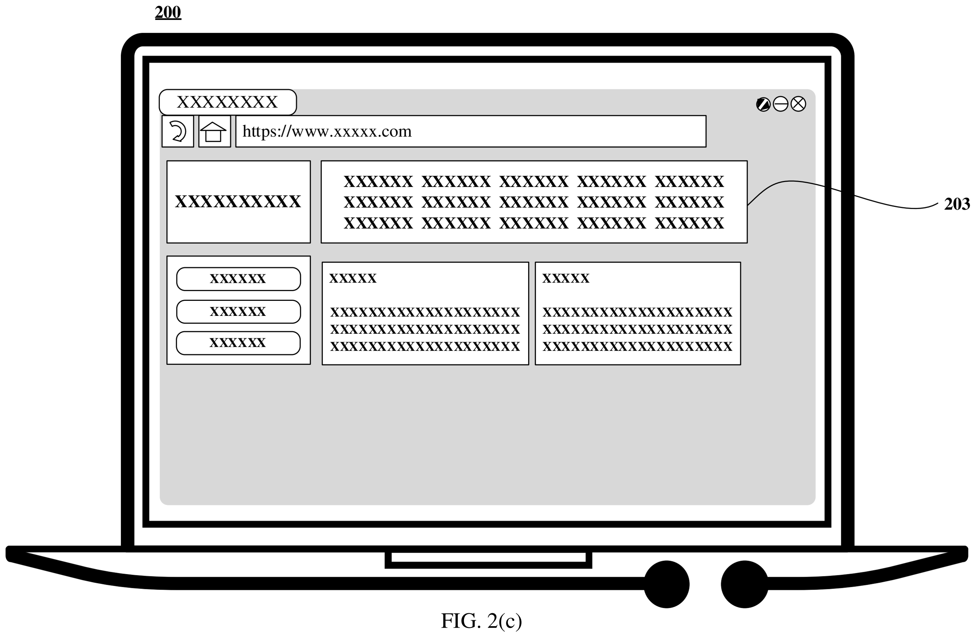

As shown in FIG. 2(b), an application interface 201 is displayed on a screen of a personal computer 200, and the application interface 201 may display an opened file directory of the personal computer 200. When the user puts the mobile phone 100 close to the personal computer 200, for example, the user performs a OneHop operation between the mobile phone 100 and the personal computer 200, as shown in FIG. 2(c), an application interface 203 of a browser application is displayed on the screen of the personal computer 200, where the application interface 203 displays a user interface of a web page link. In other words, when the user puts the mobile phone 100 close to the personal computer 200, the personal computer 200 may obtain the target photo 2011 through Bluetooth or near field communication with the mobile phone 100. When it is determined that the target photo 2011 includes the two-dimensional code, the web page link corresponding to the two-dimensional code in the target photo 2011 is parsed out by using an application configured in the personal computer 200, and the browser application is started to display the user interface of the specified web page link. The operations performed by the personal computer 200 include: receiving the target photo 2011, and parsing and processing the target photo 2011, and consecutive operations that are automatically triggered and executed by the personal computer 200 in response to the OneHop operation between the mobile phone 100 and the personal computer 200. When the personal computer 200 performs the operation, no operation intervention of the user is required.

The personal computer 200 may determine, by using a photo application, that the target photo 2011 includes the two-dimensional code, and an application used by the personal computer 200 to parse the two-dimensional code may include a QRCode tool in Windows^{®}, a zbar-ohos in Harmony^{®}, or the like. This is not specifically limited.

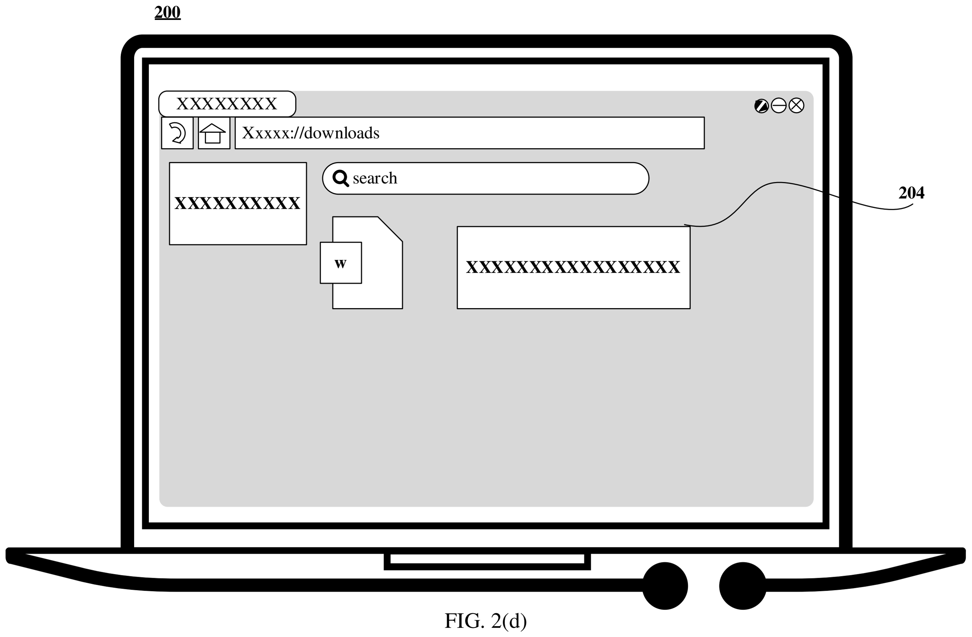

In some embodiments, when the personal computer 200 obtains, through parsing, that the two-dimensional code in the target photo 2011 corresponds to a file download link, as shown in FIG. 2(d), the personal computer 200 may start a file download application 204 to download a file. The file download application 204 herein may include a web disk application installed/configured on the personal computer 200, a browser application supporting file download, or the like.

It can be learned that, according to the data processing method provided in embodiments of this application, after taking, with the mobile phone, the target photo including the two-dimensional code, the user may put the mobile phone close to the personal computer when the mobile phone opens the target photo. In this case, the personal computer may obtain the target photo and parse/process the target photo. In this way, a complex operation process in which the user manually sends the target photo to the personal computer and further processes the target photo by using the personal computer can be avoided. This improves user experience.

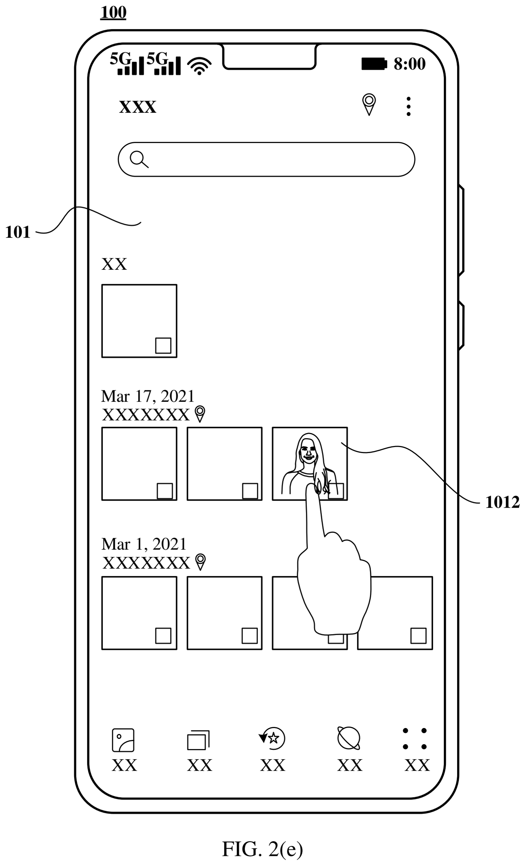

After the scenario in which the user processes the data with the mobile phone and the personal computer is described by using FIG. 2(a) to FIG. 2(d), the following describes another scenario in which a user processes data with a mobile phone and a smartwatch by using FIG. 2(e) to FIG. 2(h).

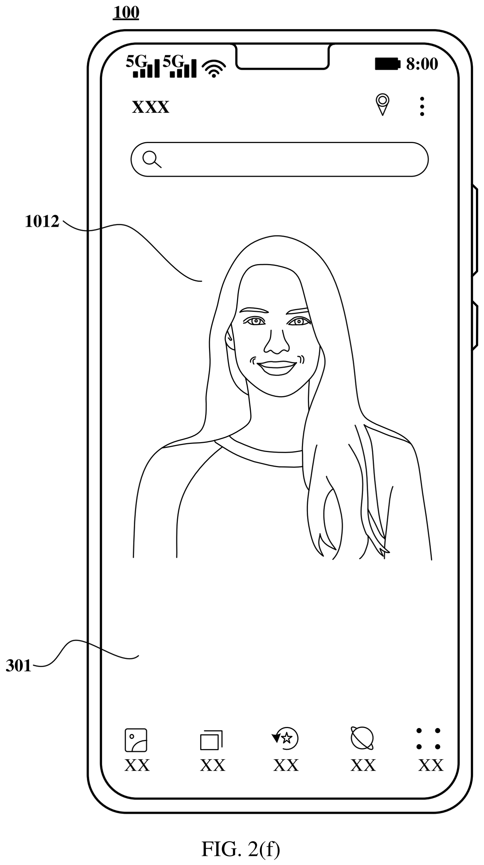

As shown in FIG. 2(e) and FIG. 2(f), an application interface 101 of a photo application is displayed on a screen of a mobile phone 100, the user opens a target photo 1012 of the mobile phone 100, an application interface 301 is displayed on the screen of the mobile phone, and the application interface 301 displays the opened target photo 1012.

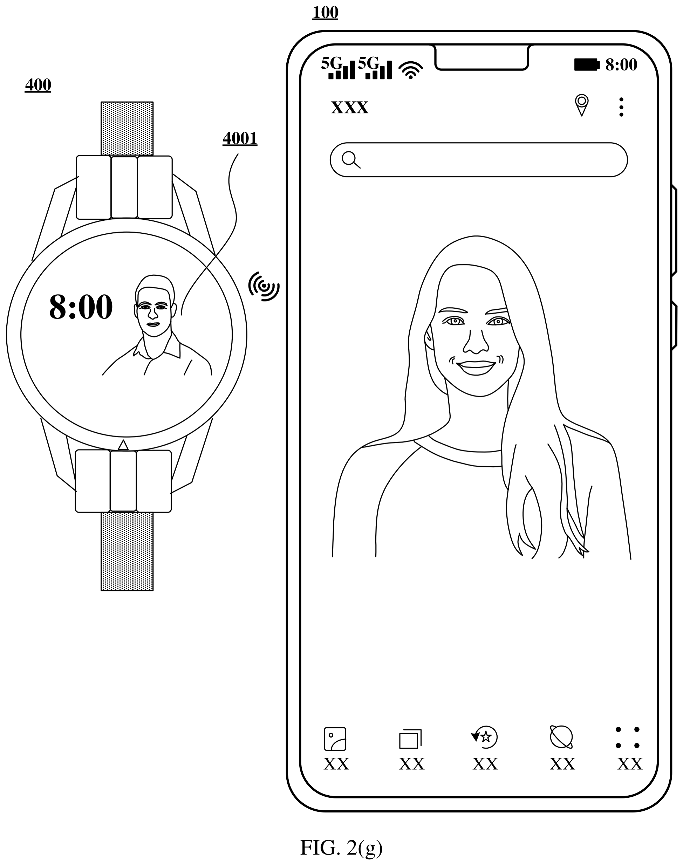

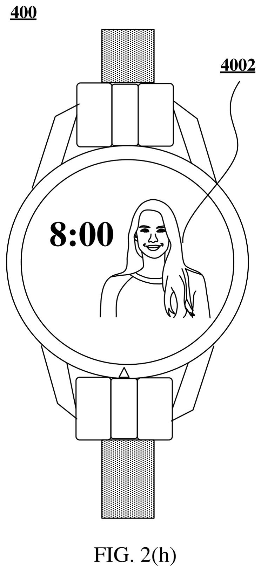

As shown in FIG. 2(g), a desktop background is displayed on a screen of a smartwatch 400, and the desktop background corresponds to a photo 4001. When the user puts the mobile phone 100 close to the smartwatch 400, for example, the user performs a OneHop operation between the mobile phone 100 and the smartwatch 400, as shown in FIG. 2(h), the mobile phone 100 transmits the target photo 1012 to the smartwatch 400, the desktop background on the screen of the smartwatch 400 is changed to a photo 4002, and the photo 4002 corresponds to the target photo 1012. In other words, after receiving the target photo 1012, the smartwatch 400 sets the target photo 1012 as the photo 4002 by using a desktop background application.

After the application scenarios to which embodiments of this application are applicable are described, the following further describes a plurality of application scenarios to which the data processing method in embodiments of this application is applicable and a data transmission service used to implement the data processing method in embodiments of this application.

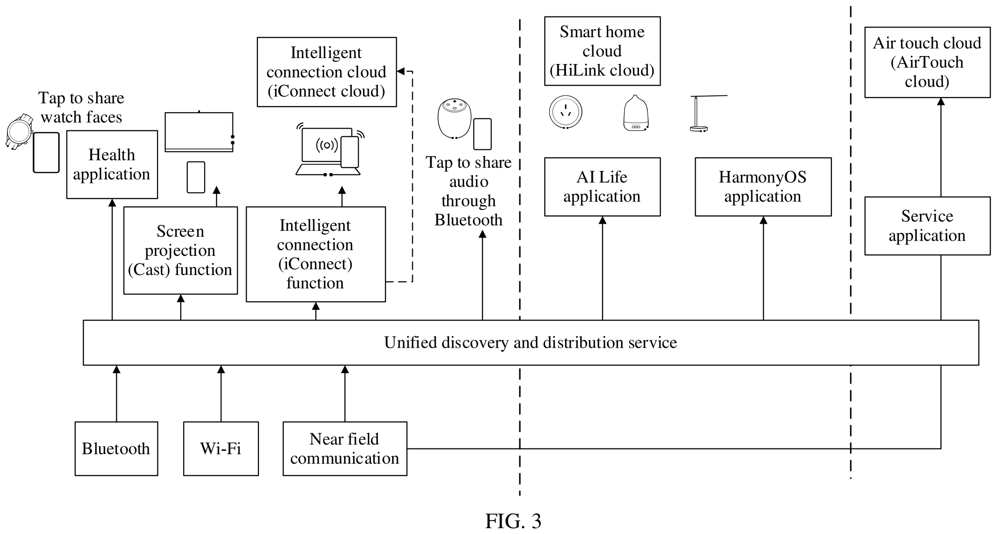

As shown in FIG. 3, the data transmission service may also be referred to as a unified discovery and distribution service. By using a OneHop (OneHop) function implemented by the unified discovery and distribution service, a user may establish a communication connection between an electronic device (for example, a mobile phone) and another electronic device (for example, a computer, a television, or a smart television) by using a OneHop operation, to quickly transfer data such as a picture, a video, and a document to each other. The unified discovery and distribution service may be implemented by using a communication technology like near field communication or Bluetooth. For example, the user performs a OneHop operation between a smartwatch and the mobile phone, and the smartwatch and the mobile phone may transfer data of a health application (application, APP) to each other, for example, tap to share watch faces.

In some embodiments, in some application scenarios, the unified discovery and distribution service may be further used to implement data transmission in conjunction with a screen projection (Cast) function and an intelligent connection (iConnect) function. The screen projection (Cast) function herein is a data processing service that is used to transmit screen content of an electronic device (for example, a mobile phone) to another electronic device (for example, a computer, a television, or a smart television). For example, when the mobile phone and a smart screen are connected to a same Wi-Fi network, and the user performs a OneHop operation between the mobile phone and the smart screen, an interface of the mobile phone may be directly displayed on the smart screen. For another example, when the mobile phone approaches/touches another smart device, for example, a speaker, a scooter, an in-vehicle infotainment system, VR glasses, or a heating waistband, by using a OneHop operation, the mobile phone may alternatively display an AI Life interface. The AI Life interface may display icons of a plurality of smart devices, to be specific, may include a currently approaching/touching smart device and another authenticated smart device. The user may select one or more of the smart devices to implement data transmission/sharing. The intelligent connection (iConnect) function is a service that is used to implement plug-and-play functionality and access security of smart terminals in the Internet of Things. The screen projection function and the intelligent connection function may be implemented by using communication technologies such as near field communication, Bluetooth, and Wi-Fi. For example, the user performs a OneHop operation between the mobile phone and a personal computer, and an interface of the mobile phone is displayed in a partial area of a screen of the personal computer. The user may operate data displayed on the screen of the personal computer and data in the interface of the mobile phone. In some embodiments, a plurality of smart terminals may further implement plug-and-play functionality and access security by using an intelligent connection cloud (iConnect cloud).

In some embodiments, the near field communication, Bluetooth, and Wi-Fi herein may also be referred to as short-range services.

In some embodiments, in some application scenarios, the unified discovery and distribution service may be further used to implement data transmission in conjunction with a smart home function (HiLink) and a cross-system function (FA Manager). The smart home function herein may also be referred to as a smart home open interconnection platform, and is used to implement interconnection and interaction between each smart home device and a smart terminal. For example, if the user performs a OneHop operation between the mobile phone and a smart speaker, the smart speaker may directly play an audio file that is being played by the mobile phone. In some embodiments, data transmission may be further implemented between each smart home device and the smart terminal by using a smart home cloud (HiLink cloud). In some other embodiments, the smart home function may be further used to implement interconnection and interaction between each smart home device and the smart terminal by using an application, for example, an AI Life application (APP). The cross-system function herein is used to implement interconnection and interaction between a smart home device and a smart terminal that run different operating systems. For example, if the user performs a OneHop operation between a mobile phone running HarmonyOS^{®} and a smart speaker running Android^{®}, the smart speaker may also directly play the audio file that is being played by the mobile phone, for example, Bluetooth one-touch audio sharing.

In some embodiments, in some application scenarios, the unified discovery and distribution service may be further used to provide a data transmission service between applications of online to offline (online to offline, O2O) merchants on smart terminals in conjunction with an air touch (AirTouch) function or an air touch cloud (AirTouch cloud). For example, the user implements tap-to-order or tap-to-place an express delivery order by using the unified discovery and distribution service and an ordering application or a logistics application.

It can be learned that, in the data processing method in embodiments of this application, in addition to implementing data transmission and processing between the electronic devices based on the interaction manner between the electronic devices and based on a short range manner, data transmission and processing may be further implemented between the electronic devices based on a cloud service. This increases an application scenario corresponding to the data processing method.

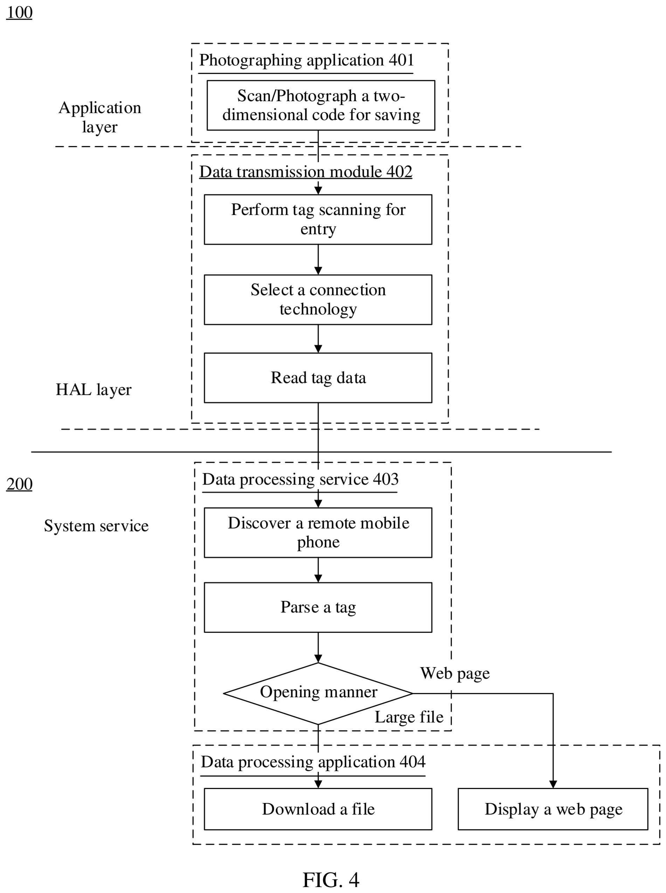

The following further describes, by using FIG. 4, software structures of a mobile phone and a personal computer to which the data processing method provided in embodiments of this application is applicable. An object of the data processing method herein may be a two-dimensional code. The two-dimensional code data processing method to which embodiments of this application are applicable may be implemented by using a data transmission module configured for a mobile phone 100 and a data processing service configured for a personal computer 200.

As shown in FIG. 4, the mobile phone 100 includes an application layer and an HAL layer. The application layer includes a photographing application 401, and the HAL layer includes a data transmission module 402. A user may use the photographing application 401 of the mobile phone 100 to scan/photograph a two-dimensional code for saving, in other words, the user may use the mobile phone 100 to photograph the two-dimensional code and save a photo corresponding to the two-dimensional code. The data transmission module 402 may sequentially perform the following steps: performing tag scanning for entry, selecting a connection technology, and reading tag data. For example, that the data transmission module 402 performs tag scanning for entry may include: When the mobile phone 100 opens the photo corresponding to the two-dimensional code, the data transmission module 402 detects an interaction manner between the mobile phone 100 and the personal computer 200. For example, the interaction manner herein may be a OneHop operation. That the data transmission module 402 selects the connection technology may include: The data transmission module 402 selects a data transmission manner corresponding to the interaction manner. For example, the OneHop operation may correspond to near field communication or Bluetooth. That the data transmission module 402 reads the tag data may include: The data transmission module 402 sends the tag data to the personal computer 200 in the data transmission manner. For example, the tag data herein may be the photo corresponding to the two-dimensional code.

Continue to refer to FIG. 4. System services configured for the personal computer 200 include a data processing service 403 and a data processing application 404. The data processing service 403 may sequentially perform the following steps: discovering the remote mobile phone 100, parsing the tag data, determining an opening manner, and invoking the data processing application 404. For example, that the data processing service 403 discovers the remote mobile phone 100 may include: The data processing service 403 detects the interaction manner between the mobile phone 100 and the personal computer 200, and receives the tag data. For example, the data herein may be the photo corresponding to the two-dimensional code. That the data processing service 403 parses the tag data may include: The data processing service 403 parses the tag data by using an application used to parse the tag data. For example, the tag data may be the photo corresponding to the two-dimensional code. The data processing service 403 determines, by using a photo application, the two-dimensional code included in the photo, and parses the two-dimensional code by using an application used to parse the two-dimensional code. That the data processing service 403 determines the opening manner may include: The data processing service 403 determines an opening manner corresponding to the tag data, and invokes the corresponding data processing application 404. For example, if the two-dimensional code is a web page or a web page link, a browser application is started to display the web page; or if the two-dimensional code is a file download link, a web disk application or a browser application supporting file download is started to download a file.

In some embodiments, both the data transmission module and the data processing service are configurable/installed functional modules or services. In other words, the data transmission module and the data processing service may be respectively configured/installed in any two electronic devices, to implement data transmission and processing between the electronic devices.

After the software structures of the electronic devices to which the data processing method is applicable are described, the following describes, by using a schematic flowchart of interaction between the electronic devices, application scenarios corresponding to the data processing method in embodiments of this application. The following application scenarios mainly relate to transmitting, parsing, and processing the two-dimensional code or the photo of the two-dimensional code between the mobile phone and the personal computer according to the data processing method in embodiments of this application.

### Embodiment 1

Embodiment 1 herein may also be referred to as a scenario 1. In Embodiment 1, after a user takes a mobile phone out to scan a two-dimensional code and goes home, the user may transmit, with the mobile phone, a photo including a two-dimensional code to a personal computer for parsing and processing. For example, after the user obtains the two-dimensional code with the mobile phone, the user opens the photo that is of the two-dimensional code and that is saved in a gallery application of the mobile phone or the two-dimensional code obtained through direct scanning/photographing, and taps a near field communication area of the personal computer with the mobile phone. A near field communication connection is established between the mobile phone and the personal computer, and the photo of the two-dimensional code or the two-dimensional code is sent to the personal computer. The personal computer parses content of the two-dimensional code and performs processing based on the content. Embodiment 1 herein may also be referred to as an outdoor two-dimensional code scanning scenario.

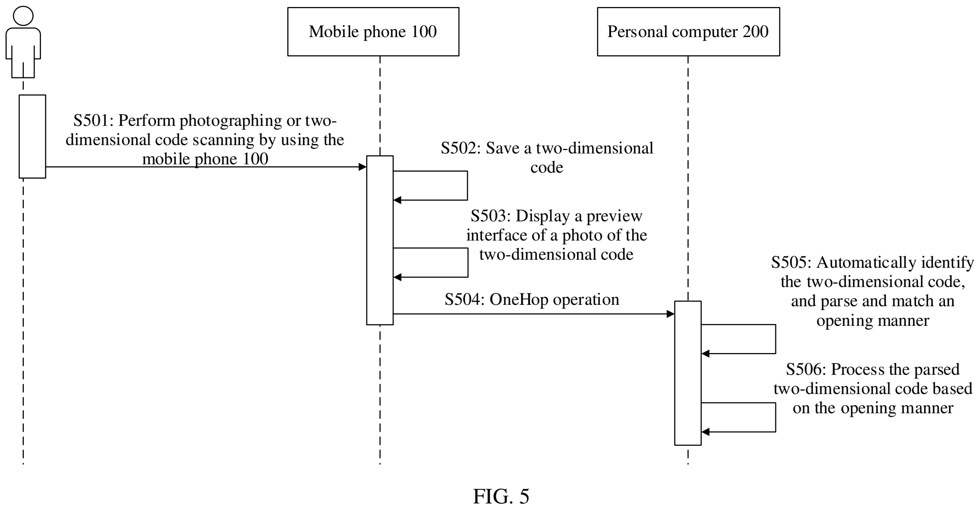

FIG. 5 is a diagram of an interaction procedure of a data processing method according to an embodiment of this application. The interaction procedure relates to an interaction process of implementing a data processing method between a mobile phone 100 and a personal computer 200, and includes:

Specifically, as shown in FIG. 5, the interaction procedure may include the following steps.

S501: The mobile phone 100 receives an operation of a user, and performs photographing or two-dimensional code scanning.

For example, the operation of the user herein may be a user operation performed by the user with the mobile phone 100 to perform photographing or two-dimensional code scanning. The user may photograph a two-dimensional code with the mobile phone 100. The two-dimensional code herein may also be referred to as a two-dimensional code label or target data.

S502: The mobile phone 100 obtains and saves the two-dimensional code.

For example, a manner in which the mobile phone 100 obtains and saves the two-dimensional code may include: after the user photographs/scans the two-dimensional code with the mobile phone 100, saving a photo of the two-dimensional code in a gallery application of the mobile phone 100.

S503: The mobile phone 100 displays a preview interface of the photo of the two-dimensional code.

For example, the mobile phone 100 may receive an operation of opening, by the user, the photo that is of the two-dimensional code and that is saved in the gallery application, and display the preview interface of the photo of the two-dimensional code. That is, the mobile phone 100 currently opens/displays the photo of the two-dimensional code. It may be understood that the photo of the two-dimensional code herein is in an open state on the mobile phone 100. In some embodiments, the mobile phone 100 may alternatively receive an operation of selecting the photo of the two-dimensional code in the gallery application by the user. In this case, the photo of the two-dimensional code is in a selected state on the mobile phone 100. The photo that is of the two-dimensional code and that is in the selected state is sent to the personal computer 200 by using the following step.

S504: Receive a OneHop operation performed by the user between the mobile phone 100 and the personal computer 200.

For example, the OneHop operation herein may be a OneHop operation that may be performed between the mobile phone 100 and the personal computer 200 when the user puts the mobile phone 100 close to the personal computer 200. In some embodiments, the OneHop operation may be implemented through near field communication. For example, NFC chips are configured for both the mobile phone 100 and the personal computer 200. When the mobile phone 100 approaches the personal computer 200, in other words, when the NFC chip in the mobile phone 100 is in contact with or approaches the NFC chip in the personal computer 200, the NFC chip in the mobile phone 100 may detect an NFC signal sent by the NFC chip in the personal computer 200, and then read, via the NFC signal, information stored in the NFC chip 1 in the personal computer 200. The information herein may be device information, including a media access control (media access control, MAC) address, a product name or a product ID, a device type, and the like of the personal computer 200, and is used to confirm a binding relationship between the mobile phone 100 and the personal computer 200. That is, the mobile phone 100 may identify/complete identity authentication of the personal computer 200, that is, data may be transmitted between the mobile phone 100 and the personal computer 200.

S505: The personal computer 200 automatically identifies the two-dimensional code, and parses and matches an opening manner.

For example, that the personal computer 200 automatically identifies the two-dimensional code, and parses and matches the opening manner may include: The personal computer 200 automatically receives the photo of the two-dimensional code, and parses out an opening manner of the two-dimensional code. In other words, the personal computer 200 may automatically confirm that subsequent processing needs to be performed on the photo of the two-dimensional code.

Specifically, that the personal computer 200 automatically receives the photo of the two-dimensional code may include: The mobile phone 100 may send the two-dimensional code to the personal computer 200 based on a data transmission manner between the mobile phone 100 and the personal computer 200, and the personal computer 200 may store the photo in a default storage area. For example, the data transmission manner may include near field communication, Bluetooth, Wi-Fi, or the like, and the storage area may include a default folder of the personal computer 200.

In some embodiments, when the data transmission manner is near field communication, the mobile phone 100 may directly send, through near field communication, the photo corresponding to the two-dimensional code to the personal computer 200 when performing the OneHop operation with the personal computer 200. Alternatively, when the data transmission manner is Bluetooth or Wi-Fi, the mobile phone 100 may send, through Bluetooth or Wi-Fi between the mobile phone 100 and the personal computer 200, the photo corresponding to the two-dimensional code to the personal computer 200 when performing the OneHop operation with the personal computer 200.

In some embodiments, that the personal computer 200 automatically parses out the opening manner of the two-dimensional code may include: The personal computer 200 opens the photo of the two-dimensional code by using a photo application corresponding to a target data type of the photo of the two-dimensional code; if it is determined that the photo includes the two-dimensional code, parsing the two-dimensional code by using an application used to parse the two-dimensional code; and matching an opening manner of the parsed two-dimensional code. For example, the application used to parse the two-dimensional code may include a QRCode tool in Windows^{®}, or Zbar-ohos in Harmony^{®}.

S506: The personal computer 200 processes the parsed two-dimensional code based on the opening manner.

For example, that the personal computer 200 processes the parsed two-dimensional code based on the opening manner may include: The personal computer 200 processes the two-dimensional code by starting/invoking an application based on the opening manner determined in step S505. The application herein may be an application installed on the personal computer 200 or an application or a service configured on the personal computer 200 by using a cloud service platform.

For example, if the two-dimensional code corresponds to a web page link, the personal computer 200 displays a user interface of the specified web page link by using a browser application; if the two-dimensional code corresponds to a file download link, the personal computer 200 downloads a data file by using a web disk application or a browser application supporting file download; or if the two-dimensional code corresponds to a cloud service link or a mini application link, the personal computer 200 starts a corresponding cloud service or mini application by using the cloud service link or the mini application link. By using steps S505 and S506, the personal computer 200 can automatically identify the two-dimensional code, parse and match the opening manner, and execute the opening manner. The entire process does not require manual intervention of the user.

It can be learned that, in the application scenario shown in FIG. 5, transfer efficiency of the two-dimensional code between the mobile phone 100 and the personal computer 200 is improved, the OneHop operation based on near field communication between the mobile phone 100 and the personal computer 200 can further ensure that short-distance transmission corresponding to the two-dimensional code is more secure, the two-dimensional code can be automatically transmitted/identified by using the OneHop operation, and the user does not need to perform complex operations such as turning on Wi-Fi or Bluetooth to perform transmission, performing transmission by using a share button, or opening an application to identify transmission, for example, tapping a file transfer assistant of WeChat to perform transmission.

In some embodiments, a method for parsing/processing the target data described in step S505 includes: The personal computer 200 may parse/process the target data based on the target data type of the received target data by discovering an application corresponding to the target data type. For example, after receiving the target data, the personal computer 200 starts/invokes the application corresponding to the target data type of the target data. For example, the target data is directly opened by using the application, or the target data is added to the application.

In some other embodiments, the method for parsing/processing the received target data by the personal computer 200 may further include: The mobile phone 100 may pre-store product configuration information of a plurality of electronic devices and application configuration information of an application/service that can be supported by the electronic device. The product configuration information includes a product ID, a product name, and a device type. The application configuration information includes an application name and an application package name and a device type supported by the application. In a process in which an interaction manner is performed between the mobile phone 100 and the personal computer 200, the mobile phone 100 obtains a product ID and a product name of the personal computer 200, determines a device type of the personal computer 200 based on the product configuration information or directly obtains a device type of the personal computer 200, and determines, based on the application configuration information, an application supported by the personal computer 200. After the mobile phone 100 determines, based on the target data type of the target data, a target application from the application supported by the personal computer 200, the mobile phone 100 transmits the target data and an application name and an application package name of the target application to the personal computer 200, and indicates the personal computer 200 to invoke the target application to process the target data. The personal computer 200 starts/invokes the target application to process the target data. It may be understood that a method for determining the target application based on the target data type of the target data may include: preconfiguring a correspondence between a data type and an application/service, and determining, based on the correspondence, the target application corresponding to the target data type of the current target data. When it is determined that one piece of target data corresponds to a plurality of target applications, one of the target applications may be selected, or an application/service configured as default in the plurality of target applications may be selected as the target application.

In some other embodiments, if the target application determined by the mobile phone 100 includes the cloud service or the mini application registered on the cloud service platform, when the mobile phone 100 transmits the target data to the personal computer 200, the cloud service platform may further indicate the personal computer 200 to start/invoke the target application to process the target data. For example, the mobile phone 100 may transmit the product ID, the product name, and the like of the personal computer 200 and the application name or the application package name of the target application to the cloud service platform. The cloud service platform indicates, based on the product ID and the product name, a cloud service client configured on the personal computer 200, and starts/invokes the target application based on the application name or the application package name. The cloud service platform herein may be an application store.

The solution for implementing data processing between the electronic devices described in Embodiment 1 mainly relates to that one electronic device does not process the target data after collecting the target data, but directly sends the target data to another electronic device in the interaction manner, so that the another electronic device parses/processes the target data. In an application scenario of some embodiments, alternatively, one electronic device may first directly parse the target data after collecting the target data, and send the parsed target data to another electronic device, so that the another electronic device directly processes the parsed target data.

### Embodiment 2

Embodiment 2 herein may also be referred to as a scenario 2. In Embodiment 2, after a user obtains a two-dimensional code with a mobile phone, the user may open a photo that is of the two-dimensional code and that is saved in a gallery application of the mobile phone or the two-dimensional code obtained through direct scanning/photographing, and tap a near field communication area of a personal computer with the mobile phone. A near field communication connection is established between the mobile phone and the personal computer, and the mobile phone parses the two-dimensional code, and sends the parsed two-dimensional code to the personal computer. The personal computer processes the two-dimensional code.

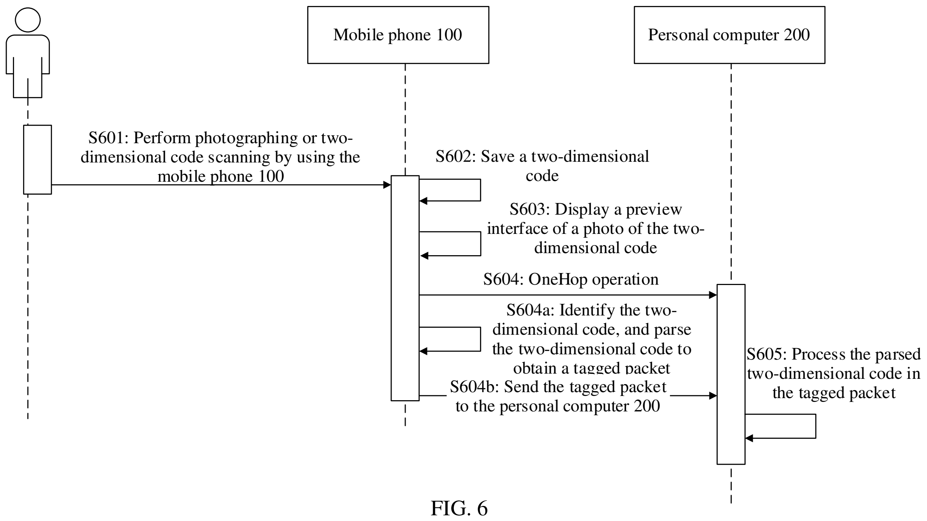

The following further describes Embodiment 2 by using FIG. 6. As shown in FIG. 6, an interaction procedure in Embodiment 2 includes steps S601 to S605.

For example, steps S601, S602, and S603 herein may be the same as steps S501, S502, and S503 included in Embodiment 1. For example, after a user photographs a two-dimensional code with a mobile phone 100, the mobile phone 100 saves a photo of the two-dimensional code in a gallery application; and before the user performs a OneHop operation between the mobile phone 100 and a personal computer 200, the user opens the photo, and the mobile phone 100 displays a preview interface of the photo of the two-dimensional code. Details are not described herein.

S604: Receive the OneHop operation performed by the user between the mobile phone 100 and the personal computer 200.

For example, in a process of performing step S604, the mobile phone 100 may perform the following steps S604a and S604b, to complete parsing of the photo of the two-dimensional code currently opened by the mobile phone 100, encapsulate the parsed two-dimensional code into a tagged packet, and send the tagged packet to the personal computer 200 when the mobile phone 100 taps the personal computer 200.

S604a: The mobile phone 100 automatically identifies the two-dimensional code, and parses the two-dimensional code to obtain the tagged packet.

For example, herein, a process in which the mobile phone 100 automatically identifies the two-dimensional code and parses the two-dimensional code to obtain the tagged packet may be similar to that in step S505. The mobile phone 100 opens the photo of the two-dimensional code by using a photo application corresponding to a target data type of the photo of the two-dimensional code; and if it is determined that the photo includes the two-dimensional code, parses the two-dimensional code by using an application used to parse the two-dimensional code.

In some embodiments, the mobile phone 100 may convert/encapsulate the parsed two-dimensional code into the tagged packet, and then transmit the tagged packet to the personal computer 200 based on an interaction manner with the personal computer 200. An example in which the tagged packet is a packet corresponding to an NDEF is used for description. Herein, the NDEF is fully referred to as an NFC data exchange format, that is, an NFC data exchange format. Table 1 below shows a format of the tagged packet.

**Table 1: Tagged packet:**

| | | | | |
|---|---|---|---|---|
| NDEF data header | Fixed data header | Device information tag | Management data header | Service data TLV |

The NDEF data header may include a unique identifier like a unique device identifier (Unique Device Identifier, UDID) of an NFC chip purchased by each manufacturer, which is used to identify a packet of the manufacturer in user communication. The fixed data header may include general information such as a total packet length, a protocol identifier, and a protocol version. The device information tag may include the unique device identifier (for example, a product ID, a product name, or a device type) and device capability information (for example, whether Wi-Fi, Bluetooth, or NFC is supported). The management data header may include tag classification information, for example, supporting reading of a bank card number, supporting recharging of a gas card, supporting connection and pairing, supporting tapping to share audio, supporting tapping to start an application, and supporting reading of a UnionPay NFC tag. In some embodiments, supporting a two-dimensional code label may be further included. Service data is used to specify service content corresponding to the tagged packet, for example, the recharged gas card, a current card count that can be read, a gas company name, a transmitted incremental gas value, a specified gas company, a specified account number, and other information, as well as a format TLV or TV, a field, a value length, and a value. The TLV represents service content corresponding to the two-dimensional code label. For example, T represents that an application on an electronic device needs to be started/launched to receive the tagged packet, L represents a link value length for an activity interface of the application that needs to be started, and V represents a specific link value.

For example, when the two-dimensional code parsed out by the mobile phone 100 corresponds to a web page link, the tagged packet encapsulated by the mobile phone 100 may be, for example, xxxxxx,255nfc20,udid,qrcd,T12www.xxxx.com.

S604b: The mobile phone 100 sends the tagged packet to the personal computer 200.

For example, the mobile phone 100 may send the parsed two-dimensional code to the personal computer 200 based on near field communication, and the personal computer 200 may store the parsed two-dimensional code in a default storage area. The parsed two-dimensional code herein may be stored in a near field communication packet in the format of the tagged packet.

S605: The personal computer 200 processes the parsed two-dimensional code in the tagged packet.

Step S605 herein may be similar to step S505 and step S506 included in Embodiment 1. For example, the personal computer 200 may obtain the parsed two-dimensional code from the tagged packet, determine an opening manner based on the parsed two-dimensional code, and process the parsed two-dimensional code based on the opening manner. For example, if the two-dimensional code corresponds to a web page link, a browser application is started/invoked to display the specified web page link, for example, a user interface at www.xxxx.com.

It can be learned that, after the user obtains the photo of the two-dimensional code by using a camera of the mobile phone 100, the mobile phone 100 may further immediately parse out the two-dimensional code, and store the two-dimensional code and the photo of the two-dimensional code at the same time. When the mobile phone 100 interacts with the personal computer 200 based on near field communication, the parsed two-dimensional code is directly encapsulated into a tagged packet supported by near field communication, and is sent to the personal computer 200, so that the personal computer 200 can directly obtain content of the two-dimensional code from the tagged packet for processing. That is, in step S604a, the process in which the mobile phone 100 automatically identifies the two-dimensional code and parses the two-dimensional code may be performed before step S604.

In Embodiment 1 and Embodiment 2, the mobile phone 100 may save the photo of the two-dimensional code, or identify/parse out the content of the two-dimensional code and then save the photo. A process of transmitting the two-dimensional code between the mobile phone 100 and the personal computer 200 may alternatively be directly transmitting the photo of the original two-dimensional code or the tagged packet corresponding to the content of the parsed two-dimensional code. In some embodiments, target data obtained by the mobile phone 100 is not limited to the two-dimensional code, and may further include a data file, an audio and video, the photo, and the like. A manner for opening the two-dimensional code by the personal computer 200 may alternatively be not limited to the foregoing several manners. For example, the opening manner may include starting an application, performing device pairing, automatically filling a Wi-Fi account/password, and the like. After the mobile phone 100 obtains the two-dimensional code, the mobile phone 100 directly sends the two-dimensional code to the personal computer 200 or forwards the two-dimensional code by using a tag, to implement two-dimensional code transfer. This completes an application scenario of one-step access corresponding to two-dimensional code obtaining, parsing, and processing.

It can be learned that, based on Embodiment 1, after the user obtains/collects the target data with the mobile phone, the personal computer may automatically obtain the target data in response to the interaction manner between the mobile phone and the personal computer, and complete parsing/processing of the target data.

In some embodiments, when the user needs to process the target data by using the personal computer, the personal computer may alternatively actively obtain/collect the target data by using the mobile phone, automatically obtain the target data based on the interaction manner between the mobile phone and the personal computer, and automatically complete parsing/processing of the target data. For example, when both the mobile phone and the personal computer are near the user, a communication connection is maintained between the personal computer and the mobile phone. When the user opens the application that is configured on the personal computer and used to parse the two-dimensional code, the personal computer may sense/discover a photographing application that is configured on the mobile phone and has a two-dimensional code photographing capability, and indicate the mobile phone to open the photographing application. In response to the user collecting the photo of the two-dimensional code by using the photographing application, the mobile phone automatically transmits the photo of the two-dimensional code to the personal computer. The personal computer receives the photo of the two-dimensional code, and parses/processes the two-dimensional code by using the application used to parse the two-dimensional code. In some other embodiments, a manner of processing the target data by the personal computer may further include: converting the target data into a corresponding picture or video, inserting a file attachment, or the like.

### Embodiment 3

Embodiment 3 herein may also be referred to as a scenario 3. A mobile phone and a personal computer are both near a user, and the user opens an application that is installed/configured on the personal computer and that has a scanning capability for collecting a two-dimensional code. In response to starting/invocation of the application, the personal computer may send a broadcast (including a Bluetooth broadcast, an NAN broadcast, or the like) to search for a device having a capability of photographing/scanning a two-dimensional code. The mobile phone may reply to the personal computer with a broadcast, indicating that the mobile phone has a camera capability, for example, include, in the broadcast, a packet tag indicating that the mobile phone has the capability of photographing/scanning the two-dimensional code. After receiving the broadcast replied by the mobile phone, the personal computer may display, on a screen, a list of devices that discover the mobile phone. In response to an operation of selecting the mobile phone (a specified device) from the list of devices by the user, the personal computer sends an instruction to the mobile phone to start a photographing function of the mobile phone. In response to the instruction, the mobile phone may open a photographing application. After responding to the user tapping a photographing button in the photographing application to photograph/scan the two-dimensional code, the mobile phone obtains a photo of the two-dimensional code and transmits the photo of the two-dimensional code back to the personal computer; and the personal computer parses the two-dimensional code and processes the parsed two-dimensional code.

In some embodiments, when responding to the user opening the application that is installed/configured on the personal computer and has the scanning capability for collecting the two-dimensional code, the personal computer may alternatively configure a cloud to search for a device that has been networked with the personal computer, discover a device having the scanning capability for collecting the two-dimensional code from the device, and display the device by using the list of devices. The user selects the mobile phone from the list of devices to send the instruction to start the photographing function of the mobile phone. The mobile phone opens the photographing application, and transmits the photo of the two-dimensional code or the two-dimensional code back to the personal computer in response to tapping the photographing button by the user. The personal computer parses and processes the two-dimensional code. Networking herein may include that the mobile phone logs in to by using an account that is the same as a user account for logging in to the personal computer, or data has been transmitted between the mobile phone and the personal computer.

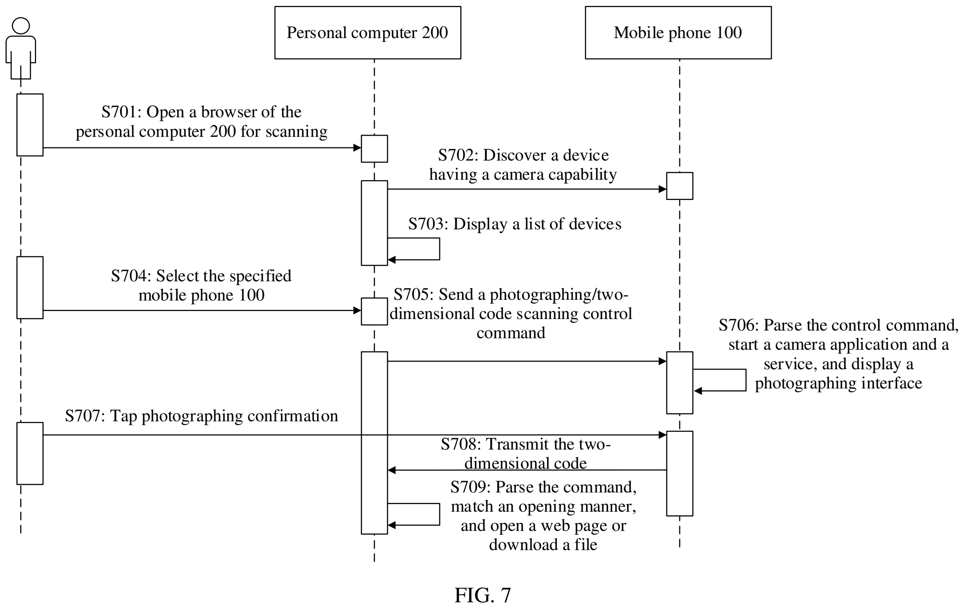

As shown in FIG. 7, an interaction procedure in Embodiment 3 relates to an interaction process of implementing a data processing method between a mobile phone 100 and a personal computer 200, and includes:
S701: The personal computer 200 opens, in response to a user operation, a browser application that has a scanning capability for collecting a two-dimensional code.

For example, the browser application herein may be an application configured/installed on the personal computer 200 and used to parse the two-dimensional code. In addition to the browser application, a QRCode tool in Windows^{®} or Zbar-ohos in Harmony^{®}, and the like may be further included.

S702: The personal computer 200 discovers, via a broadcast, a device having a camera capability.

For example, the personal computer 200 may search, by sending a broadcast (including a Bluetooth broadcast, an NAN broadcast, or the like), for a device that has a capability of photographing/scanning a two-dimensional code near the personal computer 200. The broadcast may carry a packet tag for querying whether the capability of photographing/scanning the two-dimensional code is supported.

S703: The personal computer 200 displays a list of devices in response to a reply of the mobile phone 100.

For example, when Bluetooth is enabled on the mobile phone 100, the mobile phone 100 may receive a broadcast sent by the personal computer 200, and reply to the personal computer 200 with a corresponding broadcast of a same type as the broadcast sent by the personal computer 200, indicating that the mobile phone 100 has the camera capability, in other words, reply, to the personal computer 200 in a broadcast manner, with a packet tag indicating that the mobile phone 100 has the capability of photographing/scanning the two-dimensional code. After receiving the broadcast replied by the mobile phone 100, the personal computer 200 may display the list of devices on a screen. The list of devices includes a control of the mobile phone 100.

S704: The personal computer 200 selects the specified mobile phone 100 in response to the user.

For example, the user may tap the control of the mobile phone 100 in the list of devices.

S705: The personal computer 200 sends a photographing/two-dimensional code scanning control command to the mobile phone 100.

For example, the personal computer 200 may send a control instruction to the mobile phone in response to an operation of tapping the control of the mobile phone 100 in the list of devices by the user, where the control instruction is used to instruct the mobile phone 100 to start the photographing function, to be specific, the mobile phone 100 may open the photographing application, and display an application interface of the photographing application.

S706: The mobile phone 100 parses the control command, starts the photographing application and a service, and displays a photographing interface.

For example, the photographing interface of the photographing application herein may alternatively be the application interface of the photographing application. The mobile phone 100 may open the photographing application in response to the control instruction sent by the personal computer 200, and display the application interface of the photographing application.

S707: The mobile phone 100 obtains and saves the two-dimensional code in response to an operation of tapping photographing confirmation by the user.

For example, the mobile phone 100 may obtain and save the two-dimensional code by tapping a photographing control in the application interface of the photographing application after responding to the user aligning the mobile phone 100 with the two-dimensional code. The two-dimensional code herein may be saved in a gallery application of the mobile phone 100 by using the photo of the two-dimensional code.

S708: The mobile phone 100 transmits the two-dimensional code to the personal computer 200.

S709: The personal computer 200 automatically identifies the two-dimensional code, parses and matches an opening manner, and processes the parsed two-dimensional code.

Step S708 and step S709 herein may be similar to step S505 and step S506 described in FIG. 5. Details are not described herein again.

It can be learned that, in the application scenario shown in FIG. 7, the personal computer 200 may alternatively actively search for an electronic device having a capability of photographing/scanning a two-dimensional code. If only the mobile phone 100 is found, the mobile phone 100 may be directly controlled to start the photographing function, for example, the mobile phone 100 is indicated to start/open the photographing application, and the mobile phone 100 displays the application interface of the photographing application. The user may operate the mobile phone 100 to photograph/scan the two-dimensional code, and transmit the photo of the two-dimensional code to the personal computer 200. The personal computer 200 automatically completes processing of the two-dimensional code. This avoids a case in which the user further needs to manually start the photographing function of the mobile phone 100, the user further needs to manually transmit the photo to the personal computer 200 after taking the photo of the two-dimensional code, and then the personal computer 200 parses and processes the two-dimensional code. The foregoing application scenario further improves universality of data processing performed by the electronic device, and is not limited to a single application installed/configured on the mobile phone 100 or the personal computer 200 implementing photographing and identification of the two-dimensional code, but implements inter-device identification of the two-dimensional code between the mobile phone 100 and the personal computer 200.

The solution for implementing data processing by the mobile phone and the personal computer described in Embodiment 1 relates to that device discovery and target data transmission may be implemented between the mobile phone and the personal computer by using a OneHop operation. The following describes, by using Embodiment 4 to Embodiment 6, some other application scenarios of implementing device discovery and target data transmission between the mobile phone and the personal computer.

### Embodiment 4

Embodiment 4 herein may also be referred to as a scenario 4. A process of implementing device discovery between a mobile phone and a personal computer may include: saving a photo of a two-dimensional code or a two-dimensional code obtained through direct two-dimensional code scanning/photographing in a gallery application displayed by the mobile phone. In response to a user tapping a share button, the mobile phone sends a Bluetooth, Wi-Fi, or NAN broadcast to discover the personal computer, and displays the personal computer by using a list of devices. In response to the user selecting the designated personal computer in the discovered list of devices, a communication connection is established between the mobile phone and the personal computer (including Bluetooth, a WLAN, P2P, an NAN, or the like), and the two-dimensional code is sent to the personal computer. Embodiment 4 may also be referred to as an outdoor two-dimensional code scanning scenario, in other words, the personal computer is not near the user.

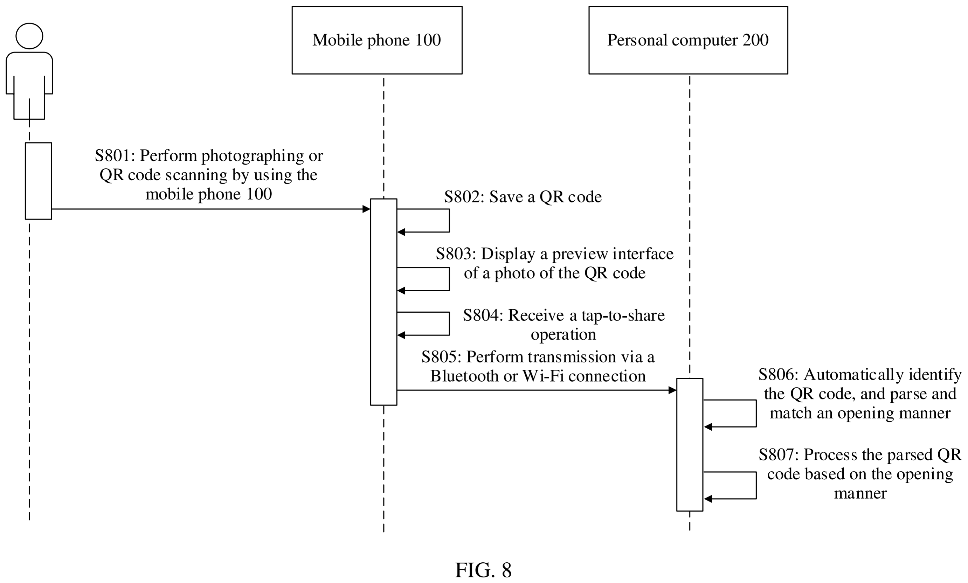

As shown in FIG. 8, an interaction procedure in Embodiment 4 relates to an interaction process of implementing a data processing method between a mobile phone 100 and a personal computer 200, and includes steps S801 to S807.

For example, steps S801, S802, and S803 herein may be the same as steps S501, S502, and S503 included in Embodiment 1 (as shown in FIG. 5). For example, after a user photographs a two-dimensional code with the mobile phone 100, the mobile phone 100 saves a photo of the two-dimensional code in a gallery application; and the user opens the photo, and the mobile phone 100 displays a preview interface of the photo of the two-dimensional code. Details are not described herein.

S804: The mobile phone 100 receives a tap-to-share operation of the user.

For example, a process of performing the tap-to-share operation of the user herein may include: displaying the two-dimensional code and a share control on a screen of the mobile phone 100; in response to the user tapping the share control, displaying a control/icon of a shareable device on the screen of the mobile phone 100, for example, a control/icon of the personal computer 200; and tapping, by the user, the control/icon of the personal computer 200.

S805: The mobile phone 100 transmits the two-dimensional code to the personal computer 200 through Bluetooth or Wi-Fi.

For example, the mobile phone 100 may send the photo of the two-dimensional code to the personal computer 200 based on a data transmission manner between the mobile phone 100 and the personal computer 200, for example, Bluetooth or Wi-Fi. In some embodiments, a communication connection may be established in advance between the mobile phone 100 and the personal computer 200 through Bluetooth or Wi-Fi. For example, both the mobile phone 100 and the personal computer 200 enable a Bluetooth function, and establish a communication connection through Bluetooth pairing.

Steps S806 and S807 herein may be similar to steps S505 and S506 included in Embodiment 1. For example, the personal computer 200 may parse the two-dimensional code from the photo of the two-dimensional code, determine an opening manner based on the parsed two-dimensional code, and process the parsed two-dimensional code based on the opening manner.

It can be learned that, in the application scenario shown in FIG. 8, although the user needs to manually send the two-dimensional code collected with the mobile phone 100 to the personal computer 200, the personal computer 200 may automatically parse and process the received two-dimensional code. This can also improve transfer efficiency of the two-dimensional code.

### Embodiment 5

Embodiment 5 herein may also be referred to as a scenario 5. A process of implementing device discovery between a mobile phone and a personal computer may include: saving a photo of a two-dimensional code or a two-dimensional code obtained through direct two-dimensional code scanning/photographing in a gallery application displayed by the mobile phone, and determining that a user is to use the two-dimensional code. The mobile phone may confirm, in a background detection manner, whether a target device that has been networked with the mobile phone (for example, a personal computer that is logged in to by using an account that is the same as a user account for logging in to the mobile phone or a personal computer that has transmitted data with the mobile phone) exists. If the target device exists, the mobile phone pops up a list of target devices on a screen. In response to the user selecting the personal computer from the target device, the two-dimensional code is transmitted to the personal computer. The personal computer parses the two-dimensional code and processes the two-dimensional code. For example, data may be transmitted between the mobile phone and the personal computer through Bluetooth, Wi-Fi, or an NAN. A process in which the mobile phone displays the photo of the two-dimensional code and determines that the user is to use the two-dimensional code may be referred to as scenario awareness of the two-dimensional code. The target device may be referred to as a trusted device or a virtual device group formed by trusted devices, that is, a device or a virtual device group formed by a plurality of devices determined by the mobile phone as authenticated after transmitting data with the mobile phone. This may also be referred to as a mutual trust relationship between the mobile phone and the personal computer.

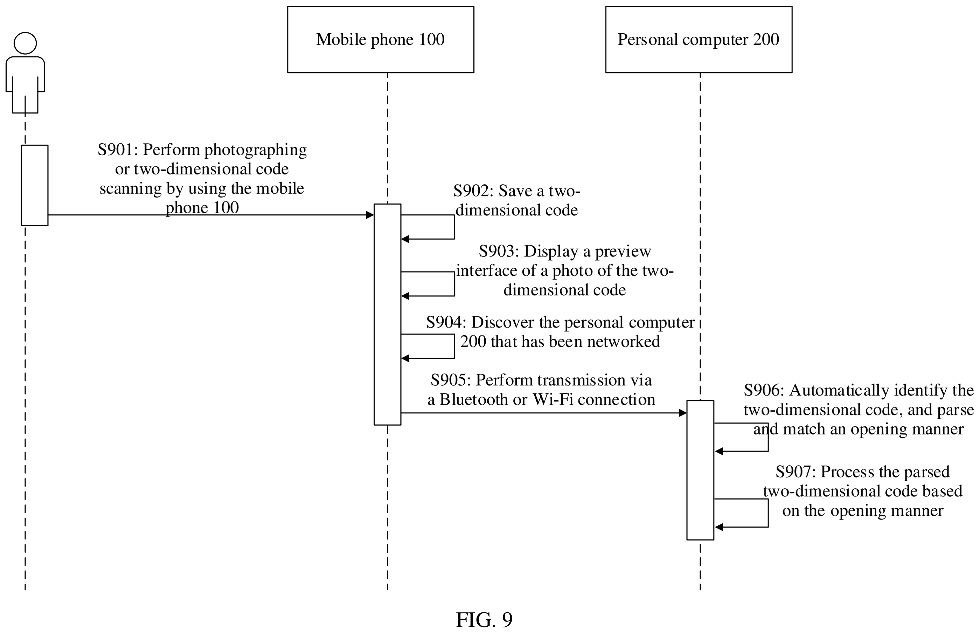

As shown in FIG. 9, an interaction procedure in Embodiment 5 relates to an interaction process of implementing a data processing method between a mobile phone 100 and a personal computer 200, and includes steps S901 to S907.

For example, steps S901, S902, and S903 herein may be the same as steps S501, S502, and S503 included in Embodiment 1 (as shown in FIG. 5). Details are not described herein again.

S904: The mobile phone 100 discovers the personal computer 200 that has been networked.

For example, the mobile phone 100 confirms a photo of a two-dimensional code currently displayed on a screen, and detects whether the personal computer 200 that has been networked with the mobile phone 100 exists. For example, a personal computer 200 that is logged in to by using an account that is the same as a user account for logging in to the mobile phone 100 is determined by using, for example, a home device management platform.

For example, step S905 herein is the same as step S805 included in Embodiment 4 (as shown in FIG. 8). Steps S906 and S907 may be similar to step S505 and step S506 included in Embodiment 1. For example, the personal computer 200 may obtain the photo of the two-dimensional code, parse the two-dimensional code, determine an opening manner based on the parsed two-dimensional code, and process the parsed two-dimensional code based on the opening manner.

It can be learned that, in the application scenario shown in FIG. 9, the mobile phone 100 may further determine the personal computer 200 by discovering a target device that has been networked. This avoids a case in which the user needs to select the personal computer 200 by using a OneHop operation or a manual share operation, and send the two-dimensional code to the personal computer 200, so that transfer efficiency of the two-dimensional code is improved. In addition, a device that has been networked is discovered, so that security of a receiver corresponding to the two-dimensional code can also be ensured, to be specific, the two-dimensional code is sent to only a trusted device or an authenticated device.

### Embodiment 6

Embodiment 6 herein may also be referred to as a scenario 6. A process of implementing target data transmission between a mobile phone and a personal computer may include: The mobile phone directly saves a photo that is of a two-dimensional code and that is obtained through photographing/two-dimensional code scanning in a personal cloud service. The personal computer confirms registration of the personal cloud service. The personal computer obtains the photo of the two-dimensional code through cloud synchronization of the personal cloud service. The personal computer parses the two-dimensional code and processes the two-dimensional code.

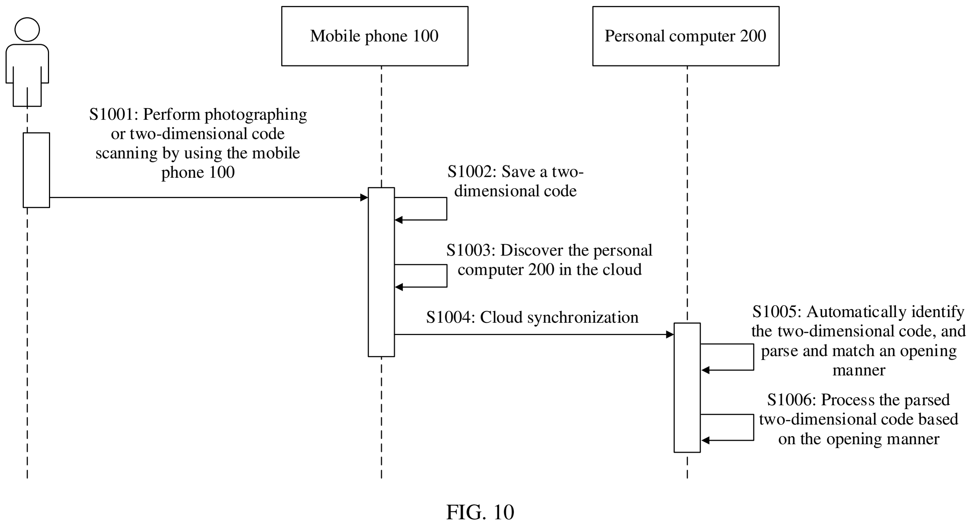

As shown in FIG. 10, an interaction procedure in Embodiment 6 relates to an interaction process of implementing a data processing method between a mobile phone 100 and a personal computer 200, and includes steps S1001 to S1006.

For example, step S1001 herein may be the same as step S501 included in Embodiment 1 (as shown in FIG. 5). Details are not described herein again.

S1002: The mobile phone 100 saves a two-dimensional code.

For example, a manner in which the mobile phone 100 saves the two-dimensional code may include: after a user photographs/scans the two-dimensional code with the mobile phone 100, uploading a photo of the two-dimensional code to a personal cloud service (not shown) for saving.

S1003: The mobile phone 100 discovers the personal computer 200 in the cloud.

For example, the cloud herein may be a personal cloud service. For example, the mobile phone 100 and the personal computer 200 may be devices that have been registered with the personal cloud service. In addition, in the personal cloud service, the mobile phone 100 and the personal computer 200 may be further configured to synchronize various types of data, such as a photo, a file, and a two-dimensional code, with each other.

S1004: The personal computer 200 transmits the two-dimensional code to the personal computer 200 through cloud synchronization.

For example, the cloud synchronization process herein may include: The mobile phone 100 may indicate the personal cloud service, and send the two-dimensional code to the personal computer 200 based on a data transmission manner between the personal cloud service and the personal computer 200, for example, Wi-Fi or cellular corresponding to the personal cloud service. Alternatively, the personal computer 200 may periodically obtain, from the personal cloud service, data uploaded by the mobile phone 100.

For example, steps S1005 and S1006 herein may be similar to step S505 and step S506 included in Embodiment 1. For example, the personal computer 200 may parse the two-dimensional code from the photo of the two-dimensional code, determine an opening manner based on the parsed two-dimensional code, and process the parsed two-dimensional code based on the opening manner.

It can be learned that, in the application scenario shown in FIG. 10, the mobile phone 100 may further save the two-dimensional code in the personal cloud service, and transmit the two-dimensional code to the personal computer 200 via the personal cloud service. This avoids a case in which the user needs to select the personal computer 200 by using a OneHop operation or a manual share operation, and send the two-dimensional code to the personal computer 200, so that transfer efficiency of the two-dimensional code is improved. In addition, in a process of synchronizing data between the mobile phone 100 and the personal computer 200 that are registered with the personal cloud service, security of a receiver corresponding to the two-dimensional code can also be ensured, to be specific, the personal cloud service synchronizes the two-dimensional code only between registered devices.

FIG. 3 to FIG. 10 describe the data transmission service applicable to implementing the data processing method in embodiments of this application and the application scenarios of the data processing method. In the application scenario shown in FIG. 5, when the mobile phone and the personal computer herein perform a OneHop operation, it has been confirmed that the two parties are electronic devices that can support fast data transmission/sharing. To be specific, device authentication/service discovery is implemented between the mobile phone and the personal computer. Further, collection, transmission, parsing, processing, and the like of the target data are completed between the mobile phone and the personal computer.

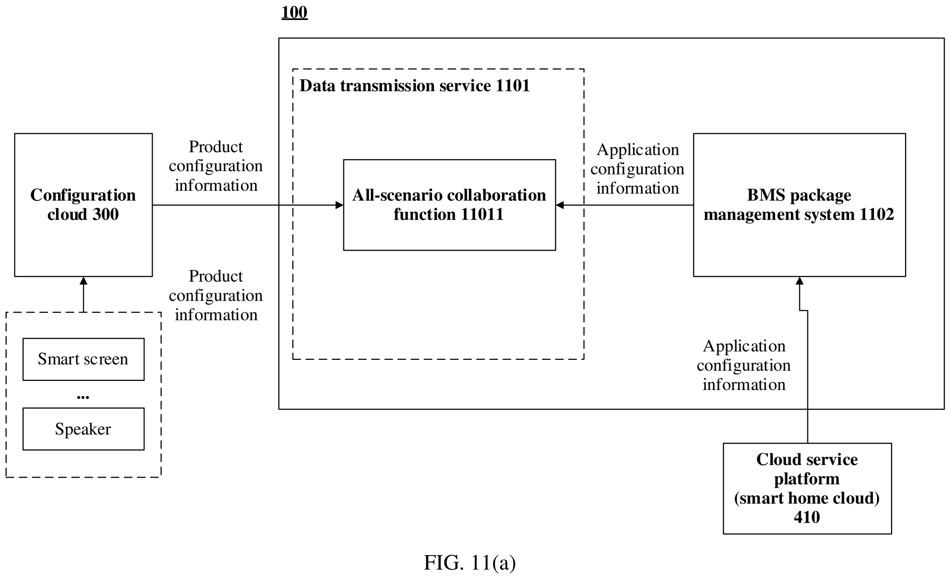

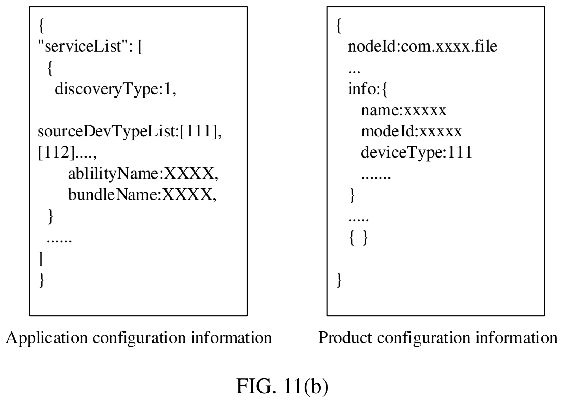

The following further describes, by using FIG. 11(a) and FIG. 11(b), a method for implementing device authentication/service discovery, target data collection/transmission, and target data parsing/processing between electronic devices. The method may also be referred to as a distribution policy or a resource processing capability of target data corresponding to the electronic device, and may be implemented by using a data transmission service run/configured by one of the electronic devices.

Refer to FIG. 11(a). An example in which the electronic device is the mobile phone 100 is used for description. A data transmission service 1101 herein may also be referred to as a unified discovery and distribution service. The data transmission service 1101 may be a system service of the mobile phone 100, and includes an all-scenario collaboration function 11011. The all-scenario collaboration function 11011 may be a functional module of the system service of the mobile phone. The all-scenario collaboration function 11011 is combined with a BMS (business management service) package management system 1102 to provide a unified device authentication/service discovery capability for a plurality of types of electronic devices. The electronic device herein may also be referred to as a 1+8+N device. For example, "1" may indicate the mobile phone; "8" may include a smart screen, a speaker, glasses, a watch, an in-vehicle infotainment system, a headset, a tablet, a personal computer, and the like; and "N" may include mobile office, smart home, health, multimedia and entertainment, and the like, and may be referred to as a service/application.

That the BMS package management system 1102 implements service discovery may include: When the mobile phone 100 is powered on and/or a specified cycle elapses, the BMS package management system 1102 obtains application configuration information of an application/service. The application configuration information herein may be application configuration information of an application/service that can be supported by each electronic device and that is stored by a cloud service platform 410 (application store), and the application configuration information may include an application name or an application package name that is used to uniquely identify the application/service. The application configuration information may further include a device type, for example, a corresponding discovered device type is a speaker, and the application configuration information needs to configure a device type of the speaker. The application configuration information herein may be in a JS object notation JSON (JavaScript object notation, JSON) format. A developer of an application/service may set application configuration information on the cloud service platform 410 and keep the application configuration information updated. The application configuration information obtained by the BMS package management system 1102 may be application configuration information of each application/service that is already launched on the cloud service platform 410, or includes only application configuration information of an application/service configured by an electronic product that is logged in to by using a same user account as the mobile phone 100.

In some embodiments, the application configuration information may further include a discovery manner. The discovery manner is used to determine an interaction manner between devices supported by the application/service, for example, Bluetooth, near field communication, Wi-Fi, or device discovery. For example, corresponding to discovery by OneHop of a near field communication tag, a type of discovery by OneHop of the near field communication tag needs to be configured in the application configuration information. FIG. 11(b)shows a storage format of application configuration information, where ablilityName and bundleName represent an application name and an application package name, discovery Type represents a discovery manner, and sourceDevTypeList represents a device type. Herein, sourceDevTypeList may include a plurality of device types, and a form of sourceDevTypeList may be a list or an array.

That the all-scenario collaboration function 11011 implements device authentication may include: The all-scenario collaboration function 11011 may be configured to obtain, from a configuration cloud 300, a configuration file including product configuration information and update the configuration file to a local cache when the all-scenario collaboration function 11011 is powered on for the first time/every time and/or after the specified cycle elapses, where the product configuration information herein may include a product ID, a product name, a device type, a proximity or distance threshold range (a product ranging boundary) corresponding to a product, and the like; obtaining a device type, a product ID, a product name, and the like of another electronic device that performs an interaction manner with the mobile phone 100; and when it is determined that the product configuration information includes the device type, the product ID, and the product name, determining that the mobile phone 100 may further implement data collection/transmission and parsing/processing with the electronic device. In some embodiments, an electronic device may register/update product configuration information to the configuration cloud 300 that specially stores the product configuration information of the electronic device before delivery, after power-on, and after a specified cycle elapses.

In some other embodiments, based on the interaction manner between the mobile phone 100 and the another electronic device, the all-scenario collaboration function 11011 may alternatively obtain only the product ID and the product name, and determine the device type based on the product configuration information. For a case in which electronic devices of a part of device types correspond to a plurality of products, the electronic device may be further uniquely determined by combining a product ID and a product name in the product configuration information. For example, for a smartwatch of a type 1, a product ID may be modelId:000137, and a product name is (watch buds). For a smartwatch of a type 2, a product ID may be modelId:000138, and a product name is (watch buds). The product configuration information obtained by the mobile phone 100 may include an electronic product to which the configuration cloud 300 and the mobile phone 100 are logged in by using a same user account. FIG. 11(b)further shows a storage format of product configuration information, where nodeId represents a file name of the product configuration information, and a file of one piece of product configuration information may store device information corresponding to a plurality of devices; name and modelId represent a product name and a product ID; and device Type represents a device type. A value of deviceType herein may correspond to sourceDevTypeList in the application configuration information.

Specifically, the mobile phone 100 and a smartwatch 400 are used as an example. That the all-scenario collaboration function 11011 collects/transmits the target data, and parses/processes the target data may include: In response to a OneHop operation between the mobile phone 100 and the smartwatch 400, the all-scenario collaboration function 11011 obtains a product ID, a product name, and a device type of the smartwatch 400, to implement authentication on the smartwatch 400; determines a corresponding target service/target application based on a target data type currently opened/running on the mobile phone 100 and the application configuration information; determines, based on a device type supported by the target service/target application and the device type of the smartwatch 400, that the smartwatch 400 supports the target service/target application; and transmits the target data to the smartwatch 400 in a preset communication manner. The preset communication manner herein may include near field communication corresponding to the OneHop operation, Bluetooth, Wi-Fi, and the like.

In some embodiments, when determining that the smartwatch 400 supports the target service/target application, the all-scenario collaboration function 11011 obtains an application name or an application package name of the target service/target application; and when transmitting the target data to the smartwatch 400 in the preset communication manner, the all-scenario collaboration function 11011 may further include the application name or the application package name in the target data to indicate the smartwatch 400 to start/invoke the target application corresponding to the application name or the application package name to process the target data.

In some other embodiments, the all-scenario collaboration function 11011 may further indicate, by using the cloud service platform 410, a cloud service client configured by the smartwatch 400, to start/invoke the application/service based on the application name or the application package name to process target data.

It can be learned that, by using the all-scenario collaboration function 11011 and the BMS package management system 1102 in FIG. 11(a), the mobile phone pre-obtains product configuration information of the smartwatch and application configuration information of a supported application/service; when detecting an interaction manner with the smartwatch, the mobile phone may determine the application/service supported by the smartwatch that needs to implement data transmission/processing; and when transmitting data to the smartwatch, the mobile phone may further indicate the smartwatch to start/invoke an application/service to process the data. Authentication between the mobile phone and the smartwatch is quickly implemented. Further, data transmission/processing between the mobile phone and the smartwatch is completed. As device types of the electronic device continuously increase, unified management of the product configuration information and the application configuration information can be further implemented. This reduces configuration data transmission/processing time. In addition, the user may alternatively implement self-defined data transmission/processing management for an application/service supported by each electronic device. This improves user experience.

The following further describes, by using the following application scenarios, interaction processes applicable to the data transmission method shown in FIG. 11.

### Embodiment 7

Embodiment 7 herein may also be referred to as a scenario 7. A process of implementing target data transmission between a mobile phone and a smartwatch may include: A user opens a photo saved in a gallery application of the mobile phone, and taps a near field communication area of the mobile phone with the smartwatch mobile phone. A near field communication connection is established between the mobile phone and the smartwatch, and the photo is sent to the smartwatch. A desktop application/photo application of the smartwatch displays the photo.

In Embodiment 7, product configuration information of the smartwatch may be pre-registered on a configuration cloud, and the mobile phone may be configured to download and save the product configuration information from the configuration cloud and obtain application configuration information of an application from a cloud service platform when the mobile phone is powered on and/or after a specified cycle elapses. A preview interface of the photo in the gallery application may be displayed on a screen of the mobile phone. It is determined that the photo that needs to be transmitted is target data, and an application/service corresponding to the target data is determined. For example, the application/service may correspond to a wearable application. In response to the smartwatch tapping the near field communication area of the mobile phone, the smartwatch sends a near field communication tag to the mobile phone through near field communication. The mobile phone may parse the near field communication tag to obtain a device type, a product ID, a product name, or the like of the smartwatch, and compare the device type, the product ID, the product name, or the like with the cached product configuration information, to determine that the smartwatch is an electronic device that needs to implement data transmission/processing. The mobile phone matches the device type with the application configuration information, to match a wearable application supported by the smartwatch, indicates, based on an application name or an application package name, the smartwatch to start/invoke the wearable application and directly transmit the photo to the smartwatch, and displays the photo by using the wearable application of the smartwatch. The wearable application herein may be the photo application.

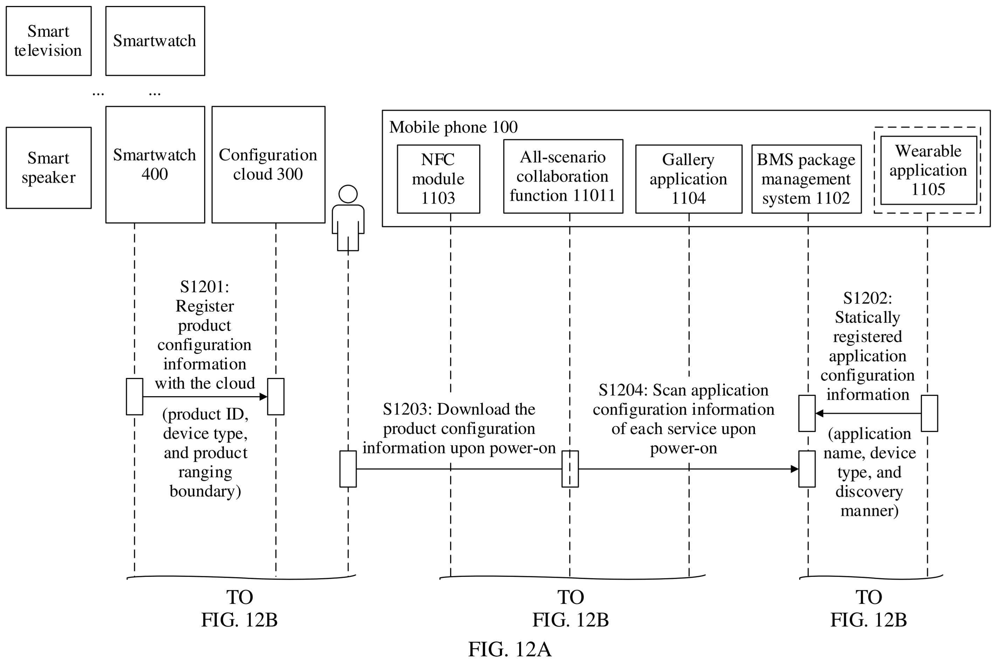

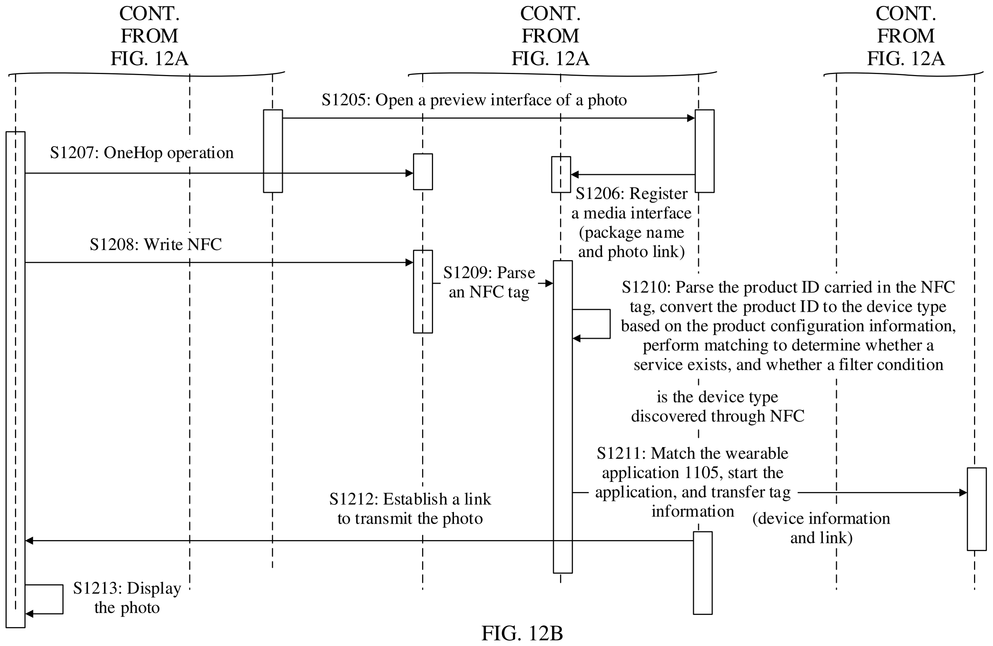

As shown in FIG. 12A and FIG. 12B, an interaction procedure in the scenario 7 relates to an interaction process of implementing a data processing method between a mobile phone 100 and a smartwatch 400, and includes:
S1201: The smartwatch 400 registers product configuration information with a configuration cloud 300.

For example, a process in which the smartwatch 400 registers the product configuration information with the configuration cloud 300 may include: Before the smartwatch 400 is delivered from a factory or after a user purchases the smartwatch 400, the smartwatch 400 may pre-register configuration information with the configuration cloud 300, and register the product configuration information of the smartwatch 400 with the configuration cloud 300 that specially stores product configuration information of an electronic device. The product configuration information stored in the configuration cloud 300 may be updated at any time. The product configuration information herein may include a product ID, a product name, a device type, and the like of the smartwatch 400.

S1202: The mobile phone 100 obtains application configuration information statically registered by a wearable application 1105.

For example, herein, a process of obtaining the application configuration information statically registered by the wearable application 1105 may include: The mobile phone 100 may pre-obtain the application configuration information of the wearable application 1105 from a cloud service platform (not shown) by using a BMS package management system 1102 and store the application configuration information of the wearable application 1105. The wearable application 1105 herein may be an application supported by a wearable device like the smartwatch or a smart band. The application configuration information of the wearable application 1105 may include a device type, a discovery manner, and the like. The device type may be a device type of the wearable device like the smartwatch or the smart band. Alternatively, the mobile phone 100 may be configured to update, from the cloud service platform when the mobile phone 100 is powered on/ and/or after a specified cycle elapses, the application configuration information that has been obtained. In some embodiments, the wearable application 1105 may not be an application configured on the mobile phone 100. In other words, the mobile phone 100 does not start/run the wearable application 1105.

S1203: The mobile phone 100 obtains the product configuration information.

For example, a process in which the mobile phone 100 obtains the product configuration information may include: each time the mobile phone 100 is powered on and/or the specified cycle elapses, downloading, by using an all-scenario collaboration function 11011, a configuration file including the product configuration information from the configuration cloud 300, and updating the configuration file to a local cache. The configuration file of the product configuration information herein may include the product configuration information of the smartwatch 400. The specified cycle herein may be, for example, every one hour. It may be understood that the foregoing value is an example, and does not limit embodiments of this application.

S1204: The mobile phone 100 obtains application configuration information of application/services.

For example, that the mobile phone 100 obtains the application configuration information of the applications/services may also be referred to as that the mobile phone 100 scans application configuration information of each service. A process in which the mobile phone 100 obtains the application configuration information of the applications/services may include: when the mobile phone 100 is powered on/ and/or the specified cycle elapses, obtaining the application configuration information from the BMS package management system 1102 by using the all-scenario collaboration function 11011. The application configuration information may include the application configuration information of the wearable application 1105 supported by the smartwatch 400.

S1205: The mobile phone 100 opens a preview interface of a photo in a gallery application 1104.

For example, the mobile phone 100 may display the preview interface of the photo in the gallery application 1104 in response to an operation performed by the user on the gallery application 1104.

S1206: The mobile phone 100 controls the gallery application 1104 to register a media interface.

For example, herein, the gallery application 1104 is controlled to register the media interface with the all-scenario collaboration function 11011. The gallery application 1104 is configured to, by using the all-scenario collaboration function 11011, transmit, when receiving an interaction manner with another electronic device, the photo that is being opened by the gallery application 1104.

In some embodiments, step S1206 is optional. In other words, the gallery application 1104 may be controlled to directly determine that data that is currently opened on a screen of the mobile phone 100 or that is currently running on the mobile phone 100 needs to be transmitted, for example, the photo that is displayed on the screen of the mobile phone 100 and that is being opened in the gallery application 1104.

S1207: Receive a OneHop operation performed by the user between the mobile phone 100 and the smartwatch 400.

For example, the OneHop operation herein may be a OneHop operation that may be performed between the mobile phone 100 and the smartwatch 400 when the user puts the smartwatch 400 close to the mobile phone 100. The mobile phone 100 may sense the OneHop operation between the mobile phone 100 and the smartwatch 400 by using an NFC module 1103.

S1208: The smartwatch 400 transmits a near field communication tag to the mobile phone 100.

For example, that the smartwatch 400 transmits the near field communication tag to the mobile phone 100 may also be referred to as that the smartwatch 400 writes NFC to the NFC module 1103 of the mobile phone 100. The near field communication tag may carry information such as the product ID and the product name of the smartwatch 400.

S1209: The mobile phone 100 parses the near field communication tag.

For example, herein, the mobile phone 100 may obtain, through parsing by using the all-scenario collaboration function 11011, the information that is of the smartwatch 400 and that is carried in the near field communication tag, for example, the product ID and the product name.

S1210: The mobile phone 100 converts, based on the product configuration information, the information obtained through parsing and carried in the near field communication tag into the device type, and then performs matching to determine whether an application/service exists.

For example, that the mobile phone 100 converts, based on the product configuration information, the information obtained through parsing and carried in the near field communication tag into the device type may include: The mobile phone 100 may compare, with the product configuration information cached in step S1203 by using the all-scenario collaboration function 11011, the information that is included in the information carried in the near field communication tag, for example, the product ID and the product name, to determine the device type of the smartwatch 400, in other words, determine whether the smartwatch 400 is an electronic device that needs to implement data transmission/processing. If the smartwatch 400 is matched in the product configuration information, it is determined that the smartwatch 400 is the electronic device that needs to implement data transmission/processing. Then, the device type of the smartwatch 400 is matched with the application configuration information, to obtain an application/service that can be supported by the smartwatch 400 through matching, and obtain the application/service.

It may be understood that, in step S1209, if the mobile phone 100 may directly obtain the device type of the smartwatch 400 by using the all-scenario collaboration function 11011, in step S1210, the mobile phone 100 may directly determine, by using the all-scenario collaboration function 11011, whether the smartwatch 400 is the electronic device that needs to implement data transmission/processing.

S1211: The mobile phone 100 matches the wearable application 1105, starts the wearable application 1105, and transfers tag information.

For example, the tag information herein may carry the information such as the product ID and the product name of the smartwatch 400 and information about the wearable application 1105. The mobile phone 100 matches the wearable application 1105 corresponding to the smartwatch 400, and then may notify the smartwatch 400 of an application name or an application package name via information. If the mobile phone 100 matches the wearable application 1105 by using the all-scenario collaboration function 11011, the mobile phone 100 may indicate, by using the cloud service platform based on a product ID and a product name, a cloud service client configured on the smartwatch 400, and start/invoke the wearable application 1105 based on the application name or the application package name of the wearable application 1105.

S1212: The mobile phone 100 establishes a connection to the smartwatch 400 to transmit the photo.

For example, the connection herein may be near field communication between the mobile phone 100 and the smartwatch 400, or may be another communication connection, for example, Bluetooth, Wi-Fi, or cellular. The photo that is being opened in the gallery application 1104 is transmitted to the smartwatch 400 over the connection.

S1213: The smartwatch 400 displays the photo.

For example, after receiving the photo, the smartwatch 400 may start/invoke the wearable application 1105 to process the photo, for example, display the photo or set the photo as a desktop of the smartwatch 400.

**It** can be learned that in the application scenario shown in FIG. 12A and FIG. 12B, the mobile phone 100 may pre-obtain product configuration information of a plurality of electronic devices including the smartwatch 400 and application configuration information of an application that can be supported. When the OneHop operation is performed between the mobile phone 100 and the smartwatch 400, the mobile phone 100 may determine, based on device information obtained by using the OneHop operation and the stored product configuration information and application configuration information, that the smartwatch 400 is an electronic device that supports target data transmission/processing and a target application corresponding to the target data. The mobile phone 100 transmits the target data to the smartwatch 400, and indicates to start/invoke the target application, to complete data transmission/processing. The smartwatch 400 can automatically receive the target data and invoke the target application for processing, without requiring manual intervention of the user. In addition, with an increase in types and a quantity of electronic devices, the mobile phone 100 can pre-obtain the product configuration information and application configuration information, so that time for configuring the electronic device by the user can be reduced, and user experience can be improved.

### Embodiment 8

Embodiment 8 herein may also be referred to as a scenario 8. A process of implementing target data transmission between a mobile phone and a personal computer may include: A user opens a photo saved in a gallery application of the mobile phone, and taps a near field communication area of the personal computer with the mobile phone. A near field communication connection is established between the mobile phone and the mobile phone, and a photo of a two-dimensional code is sent to the mobile phone. The personal computer parses the two-dimensional code in the photo, opens a website corresponding to the two-dimensional code, or downloads a file.

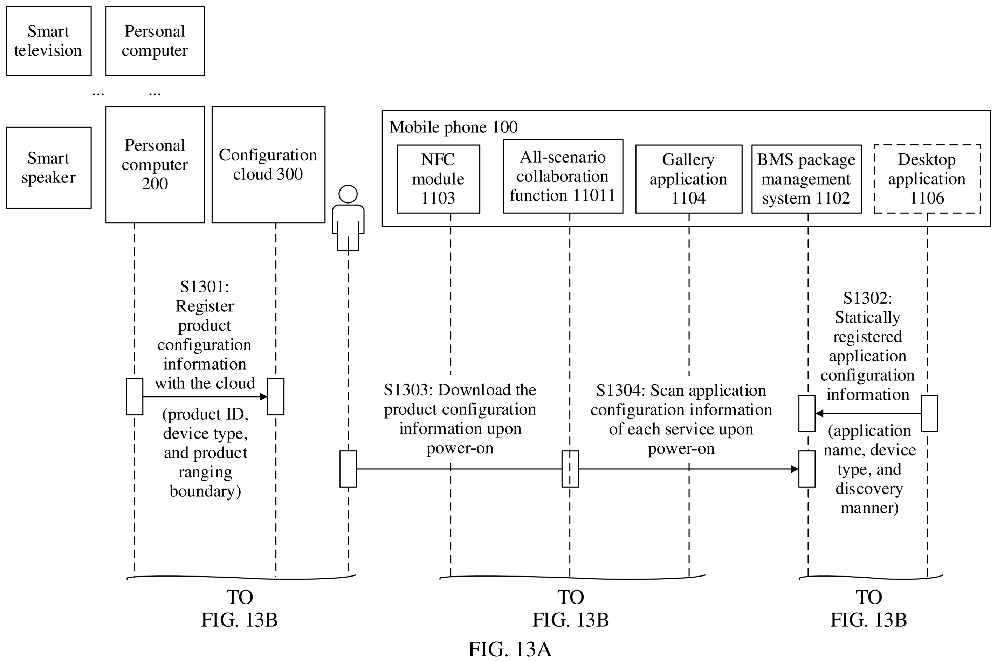

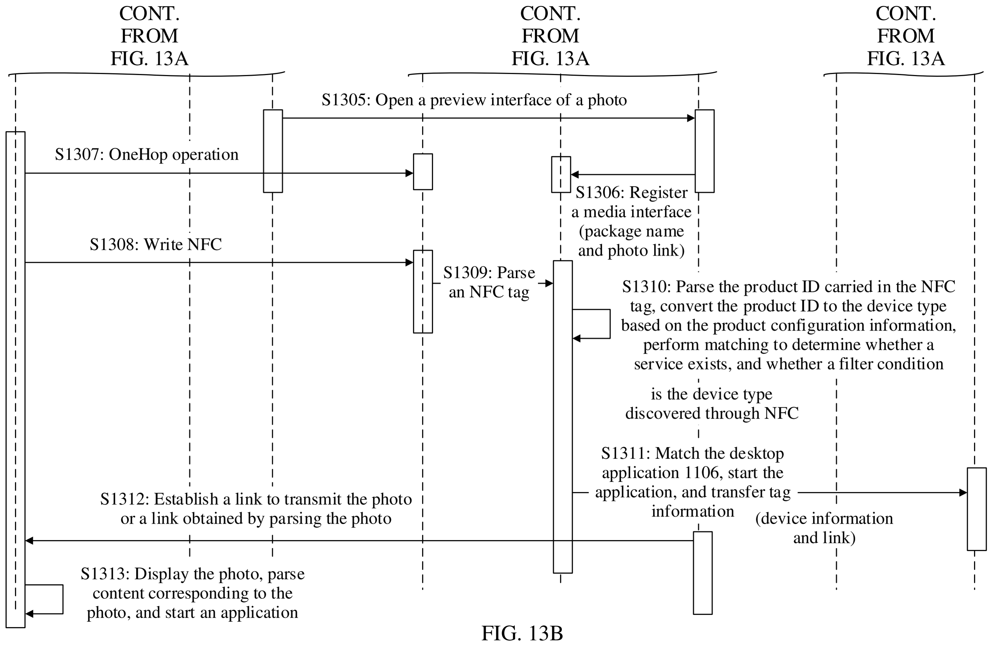

As shown in FIG. 13A and FIG. 13B, an interaction procedure in Embodiment 8 relates to an interaction process of implementing a data processing method between a mobile phone 100 and a personal computer 200, and includes steps S1301 to S1313.

For example, steps S1301 to S1312 herein may be similar to steps S1201 to S1212 included in Embodiment 7 (as shown in FIG. 12A and FIG. 12B). A difference lies in that the mobile phone 100 obtains information such as a product ID and a product name of the personal computer 200 by using an all-scenario collaboration function 11011, and matches a desktop application 1106.

S1313: The personal computer 200 processes a photo.

For example, a process in which the personal computer 200 processes the photo may include: The personal computer 200 starts/invokes the desktop application 1106 to open and display the photo. Alternatively, if the photo includes a two-dimensional code, the personal computer 200 may parse out content corresponding to the two-dimensional code, and if the two-dimensional code corresponds to a link, open a website of the link or download a file.

It can be learned that, in the application scenario shown in FIG. 13A and FIG. 13B, the mobile phone 100 may alternatively pre-obtain product configuration information of the personal computer 200 and application configuration information of an application that can be supported by the personal computer 200. When the mobile phone 100 performs an interaction manner with the personal computer 200, the mobile phone 100 may determine, in a timely manner based on device information of the personal computer 200 and the stored product configuration information and application configuration information, that the personal computer 200 is an electronic device that supports target data transmission/processing. Further, data transmission/processing can be completed between the mobile phone 100 and the personal computer 200.

In another embodiment, in Embodiment 7 and Embodiment 8, the mobile phone 100 may further transmit the target data and an application name or an application package name of the target application to the personal computer 200 or the smartwatch 400. The personal computer 200 or the smartwatch 400 starts/invokes the target application based on the application name or the application package name, to process the target data.

### Embodiment 9

Embodiment 9 herein may also be referred to as a scenario 9. A process of implementing data transmission or device control between a mobile phone and various smart devices such as a smart speaker may include: A user plays audio in a music application of the mobile phone, selects to share the audio with the smart speaker, and starts the smart speaker to play the audio.

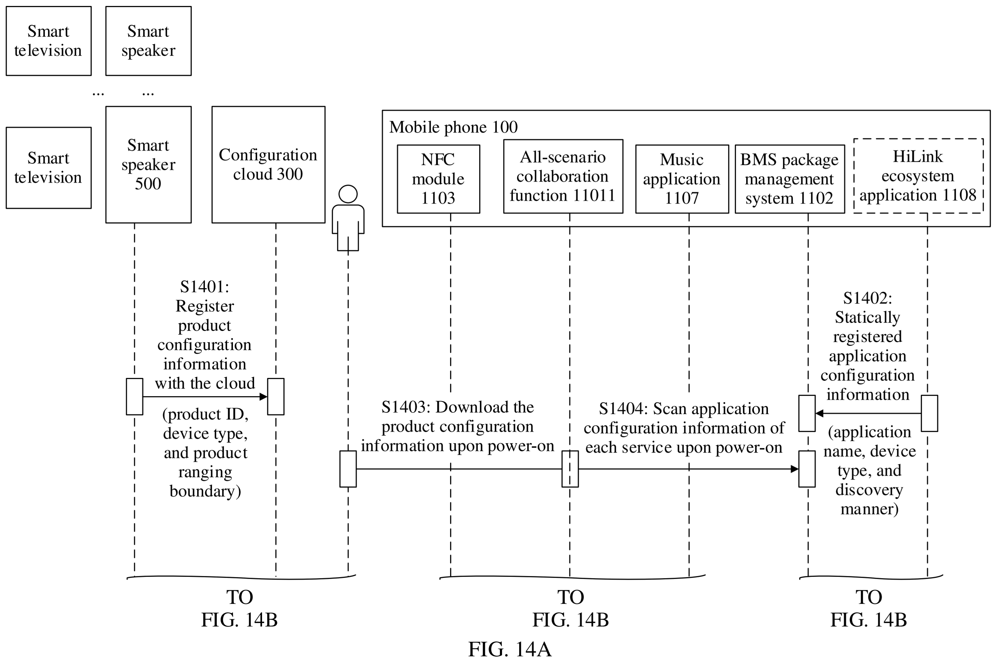

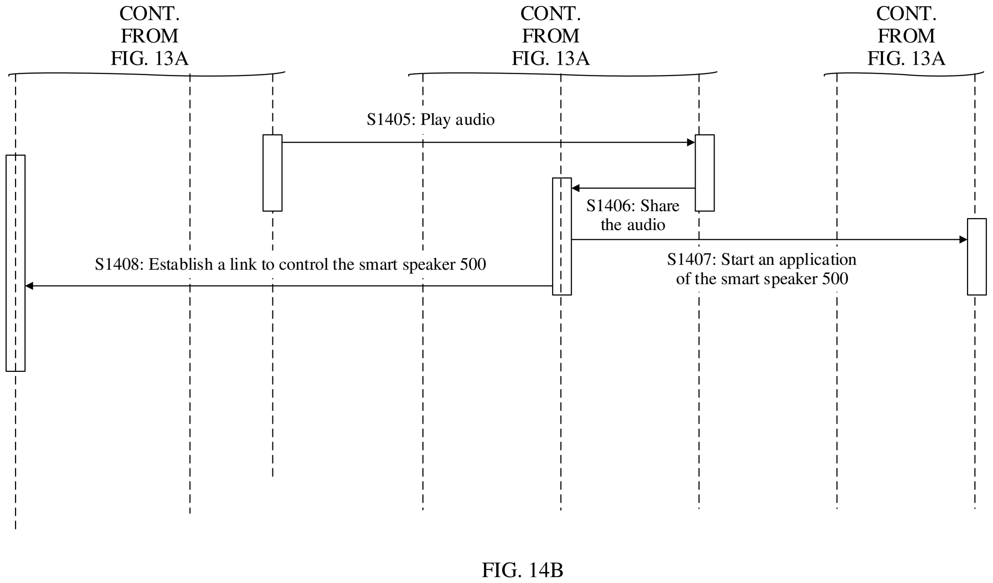

As shown in FIG. 14A and FIG. 14B, an interaction procedure in the scenario 9 relates to an interaction process of implementing a data processing method between a mobile phone 100 and a smart speaker 500, and includes steps S1401 to S1408.

For example, steps S1401 to S1404 herein may be similar to steps S1201 to S1204 included in Embodiment 7 (as shown in FIG. 12A and FIG. 12B). A difference lies in that the mobile phone 100 obtains information such as a product ID and a product name of the smart speaker 500 by using an all-scenario collaboration function 11011, and matches a HiLink ecosystem application 1108. The HiLink ecosystem application 1108 may be an application/service configured by a smart home cloud (not shown).

S1405: The mobile phone 100 plays audio in a music application 1107.

For example, the mobile phone 100 may play the audio in the music application 1107 in response to an operation performed by a user on the music application 1107.

S1406: The mobile phone 100 selects to share the audio with the smart speaker 500.

For example, a process of selecting to share the audio with the smart speaker 500 herein may include: selecting the smart speaker 500 in response to a share operation performed by the user on the music application 1107. For example, that the user performs the share operation on the music application 1107 may include: displaying a target list of devices in response to an operation performed by the user on a share control in an application interface of the music application 1107; and selecting the smart speaker 500 in the target list of devices to share the audio.

S1407: The mobile phone 100 matches an application of the smart speaker 500.

For example, a process in which the mobile phone 100 matches the application of the smart speaker 500 may include: in response to the operation of selecting the smart speaker 500 to share by the user in step S1406, obtaining the information such as the product ID and the product name of the smart speaker 500 by using the all-scenario collaboration function 11011. A device type of the smart speaker 500 is determined by comparing the information such as the product ID and the product name with cached product configuration information. If the smart speaker 500 is matched in the product configuration information, the device type of the smart speaker 500 is then matched with obtained application configuration information, to obtain, through matching, the HiLink ecosystem application 1108 that can be supported by the smart speaker 500, for example, a music application of the smart speaker 500. A cloud service client configured by the smart speaker 500 is indicated based on the product ID and the product name by using the smart home cloud, and the HiLink ecosystem application 1108 is started/invoked based on an application name or an application package name of the HiLink ecosystem application 1108.

S1408: The mobile phone 100 establishes a link to control the smart speaker 500 to play the audio.

For example, that the mobile phone 100 establishes the link to control the smart speaker 500 to play the audio may include: The mobile phone 100 transmits the audio to the smart speaker 500 by using the all-scenario collaboration function 11011 over a connection to the smart speaker 500, for example, Bluetooth, Wi-Fi, or cellular. The smart speaker 500 starts/invokes the HiLink ecosystem application 1108 to play the audio.

It can be learned that, in the application scenario shown in FIG. 14A and FIG. 14B, when the user taps the share control of the music application 1107 of the mobile phone 100 and selects to share the audio with the smart speaker 500, the mobile phone 100 may obtain device information of the smart speaker 500 and determine, in a timely manner based on the stored product configuration information and application configuration information, that the smart speaker 500 is an electronic device that needs to transmit/process data. Further, the mobile phone 100 can control the smart speaker 500 to play the audio.

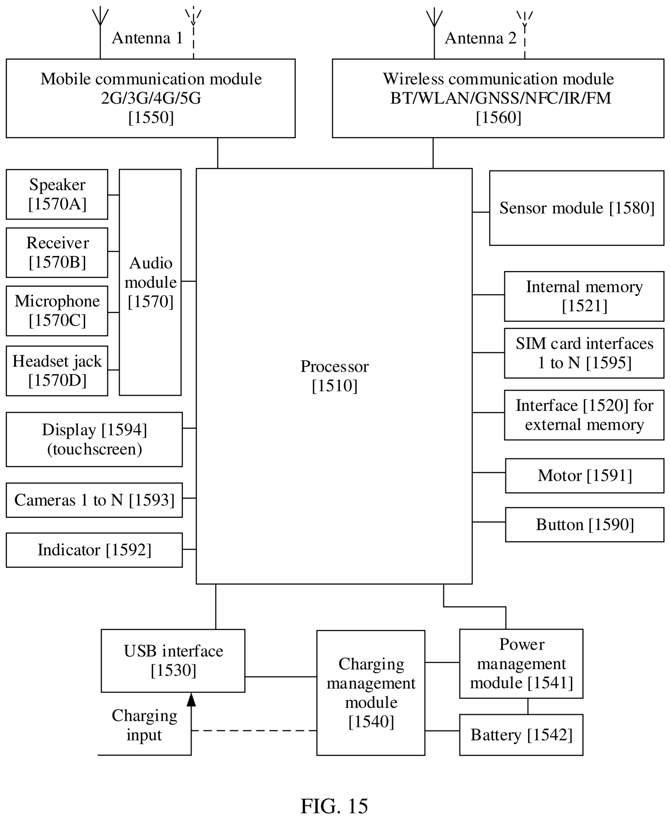

FIG. 15 is an example of a diagram of a structure of an electronic device according to an embodiment of this application. As shown in FIG. 15, the electronic device (for example, a mobile phone, a tablet computer, or a wearable device) may include a processor 1510, an interface 1520 for external memory, an internal memory 1521, a universal serial bus (universal serial bus, USB) interface 1530, a charging management module 1540, a power management module 1541, a battery 1542, an antenna 1, an antenna 2, a mobile communication module 1550, a wireless communication module 1560, an audio module 1570, a speaker 1570A, a receiver 1570B, a microphone 1570C, a headset jack 1570D, a sensor module 1580, a button 1590, a motor 1591, an indicator 1592, a camera 1593, a display 1594, a subscriber identification module (subscriber identification module, SIM) card interface 1595, and the like.

The sensor module 1580 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, and the like.

The processor 1510 may include one or more processing units. For example, the processor 1510 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

In this embodiment of this application, the processor 1510 may be configured to: in a process in which a user uses the electronic device, respond to an interaction manner between electronic devices, and automatically complete data transmission and processing between the electronic devices.

The electronic device implements a display function by using the GPU, the display 1594, the application processor, and the like. The GPU is a microprocessor for image processing, and is connected to the display 1594 and the application processor. The GPU is configured to: perform mathematical and geometric computation, and render an image. The processor 1510 may include one or more GPUs that execute program instructions to generate or change display information.

The display 1594 is configured to display an image, a video, or the like. The display 1594 includes a display panel. In this embodiment of this application, the display 1594 may be configured to display data opened by the electronic device, and the display 1594 may further receive a user operation performed by the user.

The electronic device can implement a photographing function by using the ISP, the camera 1593, the video codec, the GPU, the display 1594, the application processor, and the like. The ISP is configured to process data fed back by the camera 1593. The camera 1593 is configured to capture a static image or a video. The interface 1520 for external memory may be configured to connect to an external storage card, for example, a micro SD card, to extend a storage capability of the electronic device. The external storage card communicates with the processor 1510 through the interface 1520 for external memory, to implement a data storage function. For example, files such as music and videos are stored in the external storage card.

The internal memory 1521 may be configured to store computer-executable program code. The executable program code includes instructions. The processor 1510 runs the instructions stored in the internal memory 1521, to perform various function applications of the electronic device and data processing. For example, in this embodiment of this application, the processor 1510 may execute the instructions stored in the internal memory 1521, and the internal memory 1521 may include a program storage area and a data storage area. In this embodiment of this application, the internal memory 1521 may store instructions used to perform the data processing method.

It may be understood that the structure shown in this embodiment of this application does not constitute a specific limitation on the electronic device. In embodiments of this application, the electronic device may include more or fewer components than those shown in the figure, or a combination of some components, or splits from some components, or a different component layout. The components shown in the figure may be implemented by hardware, software, or a combination of software and hardware.

All or some of embodiments of this application may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

A person of ordinary skill in the art may understand that all or some of the procedures in embodiments of this application may be implemented by a computer program instructing relevant hardware. The program may be stored in a computer-readable storage medium. When the program is executed, the procedures in embodiments of this application may be included. The foregoing storage medium includes any medium that can store program code, for example, a read-only memory (read-only memory, ROM), a random access memory (random access memory, RAM), a magnetic disk, or an optical disc.

It should be understood that although terms such as "first" and "second" may be used in this specification to describe various features, these features should not be limited by these terms. These terms are merely used for distinction, and shall not be understood as an indication or implication of relative importance. For example, without departing from the scope of embodiments of this application, a first feature may be referred to as a second feature, and similarly the second feature may be referred to as the first feature.

In addition, various operations are described as a plurality of separate operations in a manner that is most conducive to understanding embodiments of this application. However, a described order should not be construed as implying that these operations need to depend on the described order. A plurality of these operations may be implemented in parallel, concurrently, or simultaneously. In addition, the order of the operations may alternatively be rearranged. The processing may be terminated when the described operations are completed, but may further have additional operations not included in the accompanying drawings. The processing may correspond to a method, a function, a procedure, a subroutine, a subprogram, or the like.

Unless otherwise stated, terms "contain", "have", and "include" are synonymous. The phrase "A/B" indicates "A or B". The phrase "A and/or B" indicates "(A), (B), or (A and B)".

As used herein, the term "module" may refer to being a part thereof, or include a memory (a shared memory, a dedicated memory, or a group memory) for running one or more software or firmware programs, an application-specific integrated circuit (ASIC), an electronic circuit and/or a processor (a shared processor, a dedicated processor, or a group processor), a combined logic circuit, and/or another proper component that provides the function.

In the accompanying drawings, some structure or method features may be shown in a specific arrangement and/or order. However, it should be understood that such a specific arrangement and/or order is not required. In embodiments of this application, these features may be described in a manner and/or order different from that shown in the illustrative accompanying drawings. In addition, structural or method features included in a specific accompanying drawing do not mean that all embodiments need to include such features. In embodiments of this application, these features may not be included, or these features may be combined with other features.

The foregoing has described embodiments of this application in detail with reference to the accompanying drawings. However, use of the technical solutions of this application is not limited to the variety of application mentioned in embodiments of this application, and various structures and variations may be easily implemented with reference to the technical solutions of this application, to achieve various beneficial effects mentioned in this specification. Any variation made within the scope of knowledge possessed by a person of ordinary skill in the art without departing from the purpose of this application shall fall within the scope of this application.

## Claims

1. A data processing method, applied to a first electronic device, wherein the method comprises:
in response to an interaction operation between the first electronic device and a second electronic device, obtaining device information of the second electronic device;
determining, based on the device information of the second electronic device, at least one application supported by the second electronic device;
determining a target application from the at least one application supported by the second electronic device, and transmitting first data to the second electronic device; and
triggering the second electronic device to process the first data by using the target application.

2. The method according to claim 1, wherein when the interaction operation occurs between the first electronic device and the second electronic device, the first data is in a first state on the first electronic device, wherein the first state comprises an open state or a selected state.

3. The method according to claim 2, wherein transmitting the first data to the second electronic device comprises:
when the interaction operation occurs between the first electronic device and the second electronic device, transmitting, to the second electronic device, the first data that is in the first state on the first electronic device.

4. The method according to claim 1, wherein the method further comprises:
obtaining, by the first electronic device, product configuration information and application configuration information, wherein the product configuration information comprises product IDs, product names, and device types of a plurality of electronic devices, and the application configuration information comprises application names and application package names of a plurality of applications, and device types supported by the applications.

5. The method according to claim 4, wherein when the device information of the second electronic device comprises a device type of the second electronic device, determining, based on the device information of the second electronic device, the at least one application supported by the second electronic device comprises:
determining, based on the application configuration information, at least one application corresponding to the device type of the second electronic device.

6. The method according to claim 4, wherein when the device information of the second electronic device comprises a product ID or a product name of the second electronic device, but does not comprise a device type of the second electronic device, determining, based on the device information of the second electronic device, the at least one application supported by the second electronic device comprises:
determining, based on the product configuration information, the device type that is of the second electronic device and that corresponds to the product ID or the product name of the second electronic device; and
determining, based on the application configuration information, at least one application corresponding to the device type of the second electronic device.

7. The method according to claim 5 or 6, wherein determining the target application from the at least one application supported by the second electronic device, and transmitting the first data to the second electronic device comprises:
determining, from the at least one application supported by the second electronic device based on a data type of the first data, an application name or an application package name of the target application corresponding to the data type.

8. The method according to claim 7, wherein triggering the second electronic device to perform, by using the target application, data processing corresponding to the first data comprises:
indicating the second electronic device to use, based on the application name or the application package name of the target application, the target application to process the first data.

9. The method according to claim 1, wherein the interaction operation comprises at least one of the following:
the second electronic device comes into contact with the first electronic device; or
a distance between the second electronic device and the first electronic device is reduced to be less than a first distance threshold.

10. The method according to claim 9, wherein the first electronic device transmits the first data to the second electronic device through at least one of Bluetooth, Wi-Fi, and a cellular network.

11. The method according to claim 4, further comprising:
obtaining, by the first electronic device, the product configuration information and the application configuration information when the first electronic device is powered on or at a specified cycle.

12. The method according to claim 1, wherein the first electronic device and the second electronic device are logged in to by using a same user account, or the first electronic device and the second electronic device are trusted devices.

13. An electronic device, comprising:
a memory, configured to store instructions executed by one or more processors of the electronic device, and
the processor, configured to read the instructions to perform the data processing method according to any one of claims 1 to 12.

14. A computer-readable storage medium, comprising instructions, wherein when the instructions are executed on an electronic device, the electronic device is enabled to perform the data processing method according to any one of claims 1 to 12.
